(19) **Europäisches Patentamt / European Patent Office / Office européen des brevets**

(11) **EP 4 572 417 A1**

(12) **EUROPEAN PATENT APPLICATION**
published in accordance with Art. 153(4) EPC

(43) Date of publication:
**18.06.2025 Bulletin 2025/25**

(21) Application number: **23851917.7**

(22) Date of filing: **10.08.2023**

(51) International Patent Classification (IPC):
*H04W 52/02* (2009.01)

(52) Cooperative Patent Classification (CPC):
**H04W 52/02; H04W 52/34; H04W 52/38; H04W 52/54;** Y02D 30/70

(86) International application number:
**PCT/CN2023/112143**

(87) International publication number:
**WO 2024/032696 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.08.2022 CN 202210967583**

(71) Applicant: **Datang Mobile Communications Equipment Co., Ltd.**
**Beijing 100085 (CN)**

(72) Inventors:
• **LUO, Chen**
  **Beijing 100085 (CN)**
• **WANG, Jiaqing**
  **Beijing 100085 (CN)**
• **SU, Yuwan**
  **Beijing 100085 (CN)**
• **YANG, Meiying**
  **Beijing 100085 (CN)**

(74) Representative: **Studio Torta S.p.A.**
**Via Viotti, 9**
**10121 Torino (IT)**

(54) **ENERGY-SAVING SIGNAL TRANSMISSION METHOD, STATE CONVERSION METHOD, TERMINAL, AND NETWORK SIDE DEVICE**

(57) A method for sending an energy-efficiency signal, a state transition method, a terminal and a network side device are provided. The method includes: sending the energy-efficiency signal to a network side device, wherein the energy-efficiency signal is used to assist or trigger a cell in an energy-efficiency state to perform a state-transition related operation, wherein the energy-efficiency signal is generated by the terminal; wherein the cell in the energy-efficiency state includes: at least one serving cell of the terminal, and/or, at least one neighbor cell of the serving cell.

sending the energy-efficiency signal to a network side device, wherein the energy-efficiency signal is used to assist or trigger a cell in an energy-efficiency state to perform a state-transition related operation — 201

**Fig. 2**

**Description**

**CROSS-REFERENCE TO RELATED APPLICATION**

The present application claims a priority to a Chinese patent application filed with the Chinese Patent Office on August 12, 2022, with application No. 202210967583.X and titled "Energy-efficiency signal sending method, state transition method, terminal and network side device", a disclosure of which is incorporated herein by reference in its entirety.

**TECHNICAL FIELD**

The present disclosure relates to the field of communications technology, and in particular, to an energy-efficiency signal sending method, a state transition method, a terminal and a network side device.

**BACKGROUND**

Energy-efficiency in a network is important for environmental sustainability, reducing environmental impact (greenhouse gas emissions), and saving operating cost. With the popularity of fifth generation (5G) mobile communication systems in various industries and geographical regions, the network is becoming denser, using more antennas, larger bandwidths, and more frequency bands to handle more advanced services and applications that require extremely high data rate. Most of the energy consumption in the energy cost comes from the radio access network, especially an Active Antenna Unit (AAU), with data center and fiber optic transmission accounting for a smaller share. The power consumption of wireless access can be divided into two parts: a dynamic part that is consumed only when data transmission/reception is in progress, and a static part that is continuously consumed to maintain the necessary operation of the wireless access equipment, even when data transmission/reception is not in progress.

**SUMMARY**

An object of the embodiments of the present disclosure is to provide a method for sending an energy-efficiency signal, a state transition method, a terminal, and network side device to solve a problem of how to wake up a cell in an energy-efficiency state.

To solve the above problem, embodiments of the present disclosure provide a method for sending an energy-efficiency signal, performed by a terminal; the method includes:

sending the energy-efficiency signal to a network side device, wherein the energy-efficiency signal is used to assist or trigger a cell in an energy-efficiency state to perform a state-transition related operation, wherein the energy-efficiency signal is generated by the terminal;
wherein the cell in the energy-efficiency state includes: at least one serving cell of the terminal, and/or, at least one neighbor cell of the serving cell.

Optionally, in the case that the network side device is the serving cell of the terminal, the cell in the energy-efficiency state is the serving cell and/or the neighbor cell of the serving cell; or
in the case that the network side device is the neighbor cell of the serving cell, the cell in the energy-efficiency state is the neighbor cell.

Optionally, in the case that the network side device is a primary serving cell or a secondary serving cell of the terminal, the cell in the energy-efficiency state is at least one of: the secondary serving cell, a neighbor cell of the primary serving cell, or a neighbor cell of the secondary serving cell.

Optionally, the state-transition related operation includes at least one of the followings:

switching from the energy-efficiency state to a non-energy-efficiency state; or
sending a specific reference signal or channel.

Optionally, the sending the energy-efficiency signal to the network side device includes:
sending the energy-efficiency signal to the network side device in the case that a first condition is met.

Optionally, the first condition includes at least one of the followings:

a specific measurement threshold condition;
a specific service condition;

a location information condition;
a timer condition for sending the energy-efficiency signal;
a channel state information condition; or
a synchronization condition.

Optionally, the first condition includes a second condition and/or a third condition, wherein the second condition is determined by a signaling configuration, and the third condition is pre-defined;
wherein a signaling for configuring the second condition includes at least one of a broadcast signaling, a common signaling, or a terminal-specific signaling.

Optionally, the energy-efficiency signal carries first information, and the first information includes at least one of the followings:

relevant information about the cell in the energy-efficiency state;
first indication information for indicating the cell in the energy-efficiency state to perform a state transition; or
second indication information for indicating the cell in the energy-efficiency state to send a specific signal or channel.

Optionally, the energy-efficiency signal is a target sequence, or an uplink control channel, or a Medium Access Control (MAC) signaling, or user assistance information.

Optionally, a sequence-related parameter of the target sequence is associated with the first information.

Optionally, the target sequence is at least one of an M sequence, a Gold sequence, a Zadoff-Chu (ZC) sequence, and a fixed sequence; a sequence-related parameter of the target sequence includes at least one of the followings:

an initial value of the M sequence;
an initial parameter of the Gold sequence;
a cyclic shift or a logical root sequence of the ZC sequence; or
a scrambling code for sequence scrambling of the fixed sequence.

Optionally, the uplink control channel or the MAC signaling or the user assistance information includes a preset bit field, and the preset bit field is used to carry the first information.

Optionally, the method further includes:
determining second information based on a signaling configuration and/or a pre-agreement of the serving cell; wherein the second information includes at least one of the followings:

relevant information for determining a transmission occasion of the energy-efficiency signal;
relevant information about the cell in the energy-efficiency state;
relevant information about signal sending by the cell in the energy-efficiency state; or
relevant information for generating the energy-efficiency signal.

Optionally, the relevant information about the cell in the energy-efficiency state includes at least one of the followings:

identifier information of the cell in the energy-efficiency state;
an association between the cell in the energy-efficiency state and the energy-efficiency signal;
an association between the cell in the energy-efficiency state and a transmission occasion of the energy-efficiency signal; or
configuration information of a reference signal or channel sent by the cell in the energy-efficiency state.

Optionally, the method includes at least one of the followings:

the relevant information for generating the energy-efficiency signal is associated with the relevant information for determining the transmission occasion of the energy-efficiency signal; or
the relevant information for generating the energy-efficiency signal is associated with the relevant information about the cell in the energy-efficiency state; or
the relevant information for generating the energy-efficiency signal is associated with the relevant information for determining the transmission occasion of the energy-efficiency signal and the relevant information about the cell in the energy-efficiency state; or
the relevant information for generating the energy-efficiency signal is associated with first indication information; or
the relevant information for generating the energy-efficiency signal is associated with second indication information.

The embodiments of the present disclosure further provide a state transition method, performed by a network side device, the method including:

receiving an energy-efficiency signal sent by a terminal;
assisting or triggering, based on the energy-efficiency signal, a cell in an energy-efficiency state to perform a state-transition related operation;
wherein the cell in the energy-efficiency state includes: at least one serving cell of the terminal, and/or at least one neighbor cell of the serving cell.

Optionally, in the case that the network side device is the serving cell of the terminal, the cell in the energy-efficiency state is the serving cell and/or the neighbor cell of the serving cell; or
in the case that the network side device is the neighbor cell of the serving cell, the cell in the energy-efficiency state is the neighbor cell.

Optionally, in the case that the network side device is a primary serving cell or a secondary serving cell of the terminal, the cell in the energy-efficiency state is at least one of: the secondary serving cell, a neighbor cell of the primary serving cell, or a neighbor cell of the secondary serving cell.

Optionally, the state-transition related operation includes at least one of the followings:

switching from the energy-efficiency state to a non-energy-efficiency state; or
sending a specific reference signal or channel.

Optionally, the method further includes:
configuring a second condition for the terminal through a signaling, wherein the second condition is a triggering condition of the energy-efficiency signal, and a signaling for configuring the second condition includes at least one of a broadcast signaling, a common signaling, or a terminal-specific signaling.

Optionally, the second condition includes at least one of the followings:

a specific measurement threshold condition;
a specific service condition;
a location information condition;
a timer condition for sending the energy-efficiency signal;
a channel state information condition; or
a synchronization condition.

Optionally, the energy-efficiency signal carries first information, and the first information includes at least one of the followings:

relevant information about the cell in the energy-efficiency state;
first indication information for indicating the cell in the energy-efficiency state to perform a state transition; or
second indication information for indicating the cell in the energy-efficiency state to send a specific signal or channel.

Optionally, the energy-efficiency signal is a target sequence, or an uplink control channel, or a Medium Access Control (MAC) signaling, or user assistance information.

Optionally, a sequence-related parameter of the target sequence is associated with the first information.

Optionally, the target sequence is at least one of an M sequence, a Gold sequence, a Zadoff-Chu (ZC) sequence, and a fixed sequence; a sequence-related parameter of the target sequence includes at least one of the followings:

an initial value of the M sequence;
an initial parameter of the Gold sequence;
a cyclic shift or a logical root sequence of the ZC sequence; or
a scrambling code for sequence scrambling of the fixed sequence.

Optionally, the uplink control channel or the MAC signaling or the user assistance information includes a preset bit field, and the preset bit field is used to carry first information.

Optionally, before receiving the energy-efficiency signal sent by the terminal, the method further includes:
configuring part or all of the second information for the terminal through a signaling; wherein the second information includes at least one of the followings:

relevant information for determining a transmission occasion of the energy-efficiency signal;
relevant information about the cell in the energy-efficiency state;
relevant information about signal sending by the cell in the energy-efficiency state; or
relevant information for generating the energy-efficiency signal.

Optionally, the relevant information about the cell in the energy-efficiency state includes at least one of the followings:

identifier information of the cell in the energy-efficiency state;
an association between the cell in the energy-efficiency state and the energy-efficiency signal;
an association between the cell in the energy-efficiency state and a transmission occasion of the energy-efficiency signal; or
configuration information of a reference signal or channel sent by the cell in the energy-efficiency state.

Optionally, the method includes at least one of the followings:

the relevant information for generating the energy-efficiency signal is associated with the relevant information for determining the transmission occasion of the energy-efficiency signal; or
the relevant information for generating the energy-efficiency signal is associated with the relevant information about the cell in the energy-efficiency state; or
the relevant information for generating the energy-efficiency signal is associated with the relevant information for determining the transmission occasion of the energy-efficiency signal and the relevant information about the cell in the energy-efficiency state; or
the relevant information for generating the energy-efficiency signal is associated with first indication information; or
the relevant information for generating the energy-efficiency signal is associated with second indication information.

The embodiments of the present disclosure further provide an apparatus for sending an energy-efficiency signal, including:

a sending unit, configured to send the energy-efficiency signal to a network side device, wherein the energy-efficiency signal is used to assist or trigger a cell in an energy-efficiency state to perform a state-transition related operation, wherein the energy-efficiency signal is generated by a terminal;
wherein the cell in the energy-efficiency state includes: at least one serving cell of the terminal, and/or at least one neighbor cell of the serving cell.

The embodiments of the present disclosure further provide a terminal, including a memory, a transceiver, and a processor; wherein the memory stores a program or instruction executable on the processor, and when the program or instruction is executed by the processor, the steps of the method for sending the energy-efficiency signal are implemented.
The embodiments of the present disclosure further provide a state transition apparatus, including:

a receiving unit, configured to receive an energy-efficiency signal sent by a terminal;
a processing unit, configured to assist or trigger, based on the energy-efficiency signal, a cell in an energy-efficiency state to perform a state-transition related operation;
wherein the cell in the energy-efficiency state includes: at least one serving cell of the terminal, and/or at least one neighbor cell of the serving cell.

The embodiments of the present disclosure further provide a network side device, including a memory, a transceiver, and a processor; wherein the memory stores a program or instruction executable on the processor, and when the program or instruction is executed by the processor, the steps of the state transition method are implemented.
The embodiments of the present disclosure further provide a processor-readable storage medium storing a computer program, wherein the computer program is used to cause a processor to execute the method described above.
The above technical solutions of the present disclosure have at least the following beneficial effects:
in the energy-efficiency signal sending method, the state transition method, the terminal, and the network side device according to the embodiments of the present disclosure, the terminal generates the energy-efficiency signal and sends the energy-efficiency signal to the network side device, and the cell in the energy-efficiency state performs the state-transition related operation based on the energy-efficiency signal to achieve dynamic network energy efficiency, thereby dynamically providing services to the terminal.

## BRIEF DESCRIPTION OF THE DRAWINGS

Fig. 1 shows a block diagram of a wireless communication system applicable to embodiments of the present disclosure;

Fig. 2 shows a flowchart of steps of an energy-efficiency signal sending method provided by embodiments of the present disclosure;

Fig. 3 shows a flowchart of steps of a state transition method provided by embodiments of the present disclosure;

Fig. 4 shows a scenario diagram of Example 5 provided by embodiments of the present disclosure;

Fig. 5 shows another scenario diagram of Example 5 provided by embodiments of the present disclosure;

Fig. 6 shows a scenario diagram of Example 6 provided by embodiments of the present disclosure;

Fig. 7 shows a structural diagram of an apparatus for sending an energy-efficiency signal provided by embodiments of the present disclosure;

Fig. 8 shows a structural diagram of a terminal provided by embodiments of the present disclosure;

Fig. 9 shows a structural diagram of a state transition apparatus provided by embodiments of the present disclosure;

Fig. 10 shows a structural diagram of a network side device provided by embodiments of the present disclosure.

## DETAILED DESCRIPTION

To make the technical problems to be solved, technical solutions, and advantages of the present disclosure clearer, a detailed description will be given below with reference to the accompanying drawings and specific embodiments.

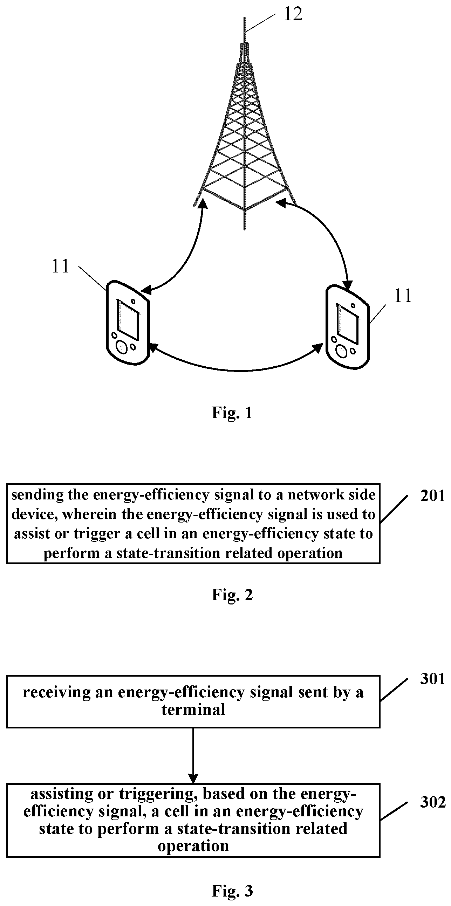

Fig. 1 shows a block diagram of a wireless communication system applicable to the embodiments of the present disclosure. The wireless communication system includes a terminal device 11 and a network side device 12. The terminal device 11 may also be referred to as a terminal or a User Equipment (UE). It should be noted that a specific type of the terminal 11 is not limited in the embodiments of the present application. The network side device 12 may be a base station or a core network. It should be noted that in the embodiments of the present application, only the base station in an NR system is taken as an example, but the specific type of the base station is not limited.

In the embodiments of the present disclosure, the term "and/or" describes the association relationship between associated objects, indicating that there can be three relationships, for example, A and/or B can mean: A exists alone, A and B exist simultaneously, and B exists alone. The symbol "/" generally indicates that the associated objects are in an "or" relationship.

In the embodiments of the present disclosure, the term "plurality" refers to two or more than two, and other quantifiers are similar to it.

The technical solutions in the embodiments of the present disclosure will be clearly and thoroughly described below with reference to the accompanying drawings in the embodiments of the present disclosure. Obviously, the described embodiments are only some of the embodiments of the present disclosure, not all of them. Based on the embodiments in the present disclosure, all other embodiments obtained by those of ordinary skill in the art without making creative efforts fall within the scope of the present disclosure.

The technical solutions provided by the embodiments of the present application can be applied to a variety of systems, especially 5G systems. For example, applicable systems may be Global System of Mobile communication (GSM) system, Code Division Multiple Access (CDMA) system, Wideband Code Division Multiple Access (WCDMA), General Packet Radio Service (GPRS) system, Long Term Evolution (LTE) system, LTE Frequency Division Duplex (FDD) system, LTE Time Division Duplex (TDD) system, Long Term Evolution Advanced (LTE-A) system, Universal Mobile Telecommunication System (UMTS), Worldwide interoperability for Microwave access (WiMAX) system, fifth Generation mobile communication (5th-Generation, 5G) New Radio (NR) system, etc. These various systems each include a terminal device and a network device. The system can also include a core network part, such as the evolved packet system (EPS), and 5G System (5GS), etc.

The terminal device involved in the embodiments of the present application may be a device that provides voice and/or data connectivity to users, a handheld device with a wireless connection function, or other processing devices connected to a wireless modem, etc. In different systems, the names of terminal device may also be different. For example, in a 5G system, the terminal device may be called User Equipment (UE). A wireless terminal device can communicate with one or more Core Networks (CNs) via a Radio Access Network (RAN). The wireless terminal device can be a mobile terminal device, such as a mobile phone (also known as a "cell phone") and a computer with a mobile terminal device, which may be, for example, portable, pocket-sized, handheld, computer-built-in or vehicle-mounted mobile device, which exchanges audio and/or data with a radio access network. For example, it may be Personal Communication Service (PCS) phone, cordless phone, Session Initiated Protocol (SIP) phone, Wireless Local Loop (WLL) station, Personal Digital Assistants (PDA) or another device. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device involved in the embodiments of the present application may be a base station, and the base station may include multiple cells that provide services to terminals. Depending on the specific application, a base station can also be called an access point, or it can be a device in the access network that communicates with the wireless terminal device through one or more sectors on the air interface, or it can be named by another name. A network device can be used to exchange received radio frames with Internet Protocol (IP) packets and act as a router between the wireless terminal device and the rest of the access network, wherein the rest of the access network can include the IP communications network. The network devices may also coordinate attribute management of the air interface. For example, the network device involved in the embodiments of the present application may be a Base Transceiver Station (BTS) in Global System for Mobile communications (GSM) or Code Division Multiple Access (CDMA) system, or it can be a network device (NodeB) in a Wide-band Code Division Multiple Access (WCDMA) system, or an evolved Node B (eNB or e-NodeB) in a Long Term Evolution (LTE) system, a 5G base station (gNB) in a 5G network architecture (next generation system), or a Home evolved base station (Home evolved Node B, HeNB), a relay node, a femto, a pico, etc., which are not limited in the embodiments of the present application. In some network structures, the network devices may include a Centralized Unit (CU) node and Distributed Unit (DU) nodes, and the CU and the DUs may also be arranged geographically separately.

The network device and the terminal device may each perform Multi-Input Multi-Output (MIMO) transmission with each other by using one or more antennas. The MIMO transmission may be Single User MIMO (SU-MIMO) transmission or Multiple User MIMO (MU-MIMO) transmission. According to the configuration and quantity of antenna combinations, the MIMO transmission may be two Dimensional-MIMO (2D-MIMO) transmission, three Dimensional-MIMO (3D-MIMO) transmission, Full Dimensional-MIMO (FD-MIMO) transmission or massive-MIMO transmission, and may be diversity transmission, pre-coded transmission, beam forming transmission, or the like.

Under the topic of network energy-efficiency, the goal of achieving energy-efficiency effect can be realized by shutting down a low-load or idle base station or putting the low-load or idle base station into a sleep (dormant) state. However, in the related art, it does not define how a sleep or energy-efficiency cell can be awakened.

As shown in Fig. 2, embodiments of the present disclosure provide a method for sending an energy-efficiency signal, performed by a terminal, the method including:

step 201: sending the energy-efficiency signal to a network side device, wherein the energy-efficiency signal is used to assist or trigger a cell in an energy-efficiency state to perform a state-transition related operation, wherein the energy-efficiency signal is generated by the terminal;
wherein the cell in the energy-efficiency state includes: at least one serving cell of the terminal, and/or, at least one neighbor cell of the serving cell (optionally including multiple neighbor cells of the serving cell).

As an optional embodiment, for a cell in an energy-efficiency state, no reference signal is sent or only sparse reference signals are sent. Specifically, the cell in the energy-efficiency state may exhibit one or more of the following behaviors:

a) sending no signal;
b) sending the reference signal for measurement and/or initial synchronization, such as a Primary Synchronisation Signal (PSS) and a Secondary Synchronisation Signal (SSS);
c) sending the reference signal that can obtain downlink synchronization, such as a Synchronization Signal and PBCH block (SSB), an energy-efficiency-specific reference signal (with System Frame Number (SFN) related information), a Tracking Reference Signal (TRS), etc., or a specific reference signal configured for downlink synchronization in the energy-efficiency state of the base station;
d) receiving and/or sending the reference signal for uplink synchronization, such as a Physical Downlink Control Channel (PDCCH) carrying a Tracking Area (TA) and/or a preamble sent by the receiving terminal, or the specific reference signal for uplink synchronization configured in the energy-efficiency state of the base station;
e) receiving and/or sending physical layer channel information of the base station in the energy-efficiency state, such as the PDCCH, a Physical Uplink Control Channel (PUCCH), etc. A receiving occasion and/or a transmission occasion of the physical layer channel information in the energy-efficiency state of the base station may be a subset or a full set of the receiving occasion and/or transmission occasion set of the physical layer channel information in the non-energy-efficiency state (also referred to as a normal state), or may be a specific receiving occasion and/or transmission occasion configured in the energy-efficiency state of the base station.

As another optional embodiment, the present disclosure mainly involves the following four scenarios.

Scenario 1: the network side device is the serving cell of the terminal, and the cell in the energy-efficiency state is at least one neighbor cell of the serving cell; in other words, the terminal sends an energy-efficiency signal to the serving cell, and the neighbor cell of the serving cell is in the energy-efficiency state. Accordingly, the energy-efficiency signal is used to assist the neighbor cell to perform a state-transition related operation;

In this scenario, after receiving the energy-efficiency signal sent by the terminal, the serving cell indicates the cell in the energy-efficiency state (the neighbor cell of the serving cell) to perform a state transition based on the information carried by the energy-efficiency signal.

Scenario 2: the network side device is the neighbor cell of the serving cell, and the cell in the energy-efficiency state is the neighbor cell; in other words, the terminal sends an energy-efficiency signal to the neighbor cell of the serving cell, and the neighbor cell of the serving cell is in the energy-efficiency state. Accordingly, the energy-efficiency signal is used to trigger the neighbor cell to perform the state-transition related operation;

in this scenario, after receiving the energy-efficiency signal sent by the terminal, the neighbor cell of the serving cell performs the state transition based on the information carried by the energy-efficiency signal.

Scenario 3: the network side device is the serving cell of the terminal, and the cell in the energy-efficiency state is the serving cell; in other words, the terminal sends an energy-efficiency signal to the serving cell, and the serving cell is in the energy-efficiency state. Accordingly, the energy-efficiency signal is used to trigger the serving cell to perform the state-transition related operation;

in this scenario, after receiving the energy-efficiency signal sent by the terminal, the serving cell performs the state transition based on the information carried by the energy-efficiency signal.

Scenario 4: the network side device is a primary serving cell or a secondary serving cell of the terminal, the cell in the energy-efficiency state is at least one of: the secondary serving cell, a neighbor cell of the primary serving cell, or a neighbor cell of the secondary serving cell. This scenario applies to a Carrier Aggregation (CA) scenario where the terminal sends an energy-efficiency signal to the primary serving cell or the secondary serving cell, and the secondary serving cell or the neighbor cell of the secondary serving cell or the neighbor cell of the primary serving cell is in the energy-efficiency state. Accordingly, the energy-efficiency signal is used to assist or trigger the cell in the energy-efficiency state to perform the state-transition related operation.

In this scenario, after receiving the energy-efficiency signal sent by the terminal, the primary serving cell or the secondary serving cell indicates the cell in the energy-efficiency state (the neighbor cell of the serving cell or the secondary serving cell) to perform the state transition based on the information carried by the energy-efficiency signal.

It should be noted that the "state-transition related operation" mentioned in this application may be a one-way transition or a two-way transition.

In at least one embodiment of the present disclosure, a state-transition related operation described in "one-way transition" includes at least one of the followings:

switching from the energy-efficiency state to a non-energy-efficiency state; or
sending a specific reference signal or channel.

The non-energy-efficiency state may also be called a regular service state; "switching from the energy-efficiency state to a non-energy-efficiency state" may be understood as waking up a cell in energy-efficiency state, or turning on the cell, or turning off the energy-efficiency state of a cell, or controlling a cell in energy-efficiency state to resume service, etc., which is not specifically limited herein.

Optionally, the above-mentioned specific reference signal or channel may be a known signal, or a signal in a non-energy-efficiency state. This situation may be understood as that a cell in an energy-efficiency state only sends a subset of the signals configured in a regular service state, or that a cell in an energy-efficiency state only sends a sparse reference signal; the cell in the energy-efficiency state sending the specific reference signal or channel is equivalent to implicitly or indirectly indicating that it switches to a regular service state. For example, sending a specific reference signal or channel is sending a synchronization reference signal block SSB under a regular configuration.

Optionally, the above-mentioned specific reference signal or channel may be a signal or channel used only in an energy-efficiency state, or may be understood as a reference signal or channel for a specific purpose. For example, the above-mentioned specific reference signal or channel is a signal configured in the energy-efficiency state; for another example, the sending the specific reference signal or channel is sending a PDCCH carrying a TA.

Optionally, the state-transition related operation described in the "two-way transition" may be understood as a transition between the energy-efficiency state and the non-energy-efficiency state of the cell, or a transition between turning off the cell and turning on the cell.

In at least one optional embodiment of the present disclosure, step 201 includes:

sending the energy-efficiency signal to the network side device in the case that a first condition is met.

Optionally, the first condition includes at least one of the followings:

a specific measurement threshold condition;
a specific service condition;

a location information condition;
a timer condition for sending the energy-efficiency signal;
a channel state information condition; or
a synchronization condition.

Optionally, the first condition includes a second condition and/or a third condition, wherein the second condition is determined by a signaling configuration, and the third condition is pre-defined; in other words, the terminal determines the first condition based on a network signaling and/or the pre-agreement. The signaling for configuring the second condition includes at least one of a broadcast signaling, a common signaling, or a terminal-specific signaling.

In another optional embodiment of the present application, the energy-efficiency signal carries first information, and the first information includes at least one of the followings:

relevant information about the cell in the energy-efficiency state;
first indication information for indicating the cell in the energy-efficiency state to perform a state transition; or
second indication information for indicating the cell in the energy-efficiency state to send a specific signal or channel.

The first indication information can be used for at least one of the following purposes.

1) Time domain energy-efficiency related function indication:

assisting in indicating or triggering the base station (the base station corresponding to the cell in the energy-efficiency state) to send a reference signal or send, based on a specific sending pattern, a reference signal;
assisting in indicating or triggering the base station (the base station corresponding to the cell in the energy-efficiency state) to send a channel, or send, based on a relevant parameter or a configured sending pattern, a channel; here, the channel includes at least one of a physical layer control channel, a physical layer shared channel, or a physical layer broadcast channel;
assisting in indicating or triggering the base station (the base station corresponding to the cell in the energy-efficiency state) to receive a reference signal or receive a reference signal based on a specific receiving pattern;
assisting in indicating or triggering the base station (the base station corresponding to the cell in the energy-efficiency state) to receive a channel, or receive, based on a relevant parameter or a configured sending pattern, a channel; here, the channel includes at least one of a physical layer control channel, a physical layer shared channel, or a physical layer broadcast channel;
assisting in indicating or triggering the cell to be turned off or be turned on;
assisting in indicating or triggering a transition between the normal state and the energy-efficiency state of the cell;
the above-mentioned specific sending pattern or receiving pattern refers to a resource location set in the time domain under a specific parameter configuration.

2) Frequency domain energy-efficiency related function indication:

assisting in indicating or triggering the base station (the base station corresponding to the cell in the energy-efficiency state) to perform a frequency-domain resource bandwidth adjustment for sending the signal or channel, such as adjusting to a target size transmission bandwidth, or adjusting to a target transmission bandwidth, etc. The target size transmission bandwidth or the target transmission bandwidth may be configured by a higher-layer signaling, or may be pre-agreed, or may be determined by the bandwidths associated with different starting positions or ending positions;
assisting in indicating or triggering the base station (the base station corresponding to the cell in the energy-efficiency state) to perform a frequency-domain resource carrier frequency adjustment for sending the signal or channel, such as a transition between multi-carrier and single carrier, adjustment of the quantity of secondary cells, carrier switching of the energy-efficiency cell, turning on/off the secondary cell, etc.

3) Spatial domain energy-efficiency-related function indication:

assisting in indicating or triggering the adjustment of the related information of the spatial domain unit (such as an antenna unit/a sending-receiving unit TxRU/an antenna array/an antenna port/a sending-receiving point TxRP) sent/received by the base station (the base station corresponding to the cell in the energy-efficiency state). The adjusted relevant information of the spatial domain unit may be configured through higher-layer signaling or may be pre-agreed.
assisting in indicating or triggering the adjustment of the related information of the reference signal of the associated spatial domain information sent/received by the base station (the base station corresponding to the cell in the energy-efficiency state).

4) Power domain energy-efficiency related function indication:

assisting in indicating or triggering the adjustment of the relevant information of the power of the reference signal/channel sent/received by the base station (the base station corresponding to the cell in the energy-efficiency state);

assisting in indicating or triggering the adjustment of the relevant information of a relevant parameter factor in a power algorithm sent/received by the base station (the base station corresponding to the cell in the energy-efficiency state).

For the purpose of the above energy-efficiency signal, one or a combination of the following modes can be used.

The energy-efficiency signal is used for assisting in indicating or triggering of at least one of the above purposes, and the specific purpose configuration may be configured through broadcast information or a higher-layer signaling, or may be pre-agreed.

An energy-efficiency signal 1 and an energy-efficiency signal 2 are jointly used for assisting in indicating or triggering of at least one purpose, wherein the energy-efficiency signal 1 is used for a capability or a capability activation indication of the terminal, and the energy-efficiency signal 2 is used for assisting in indicating or triggering of a specific energy-efficiency solution, and the specific purpose configuration thereof may be configured through broadcast information or a higher-layer signaling.

Furthermore, the turning on or the turning off in the aforementioned purpose may also be indicated by whether an energy-efficiency signal is detected, or the purposes may be indicated by the carried N-bit information, including: a bit mapping or an index indication of an association relationship.

The second indication information can indicate the cell in the energy-efficiency state to receive and/or send at least one of the followings:

1) reference signal and/or channel configured in the normal state (i.e., non-energy-efficiency state);

2) reference signal used for measurement and/or initial synchronization, such as PSS+SSS;

3) reference signal that can obtain downlink synchronization, such as a Synchronization Signal and PBCH block (SSB), an energy-efficiency-specific reference signal (with System Frame Number (SFN) related information), a Tracking Reference Signal (TRS), etc., or a specific reference signal configured for downlink synchronization in the energy-efficiency state of the base station;

4) reference signal used for uplink synchronization, such as a Physical Downlink Control Channel (PDCCH) carrying a Tracking Area (TA) and/or a preamble sent by a receiving terminal and/or, or the specific reference signal for uplink synchronization configured in the energy-efficiency state of the base station; or

5) physical layer channel information of the base station in the energy-efficiency state, such as the PDCCH, a Physical Uplink Control Channel (PUCCH), etc. The receiving occasion and/or transmission occasion of the physical layer channel information in the energy-efficiency state of the base station may be a subset or a full set of the receiving occasion and/or transmission occasion set of the physical layer channel information in the non-energy-efficiency state (also referred to as a normal state), or may be a specific receiving occasion and/or transmission occasion configured in the energy-efficiency state of the base station.

In at least one optional embodiment of the present disclosure, the energy-efficiency signal is a target sequence, or an uplink control channel, or a Medium Access Control (MAC) signaling, or user assistance information.

In an optional implementation, a sequence-related parameter of the target sequence is associated with the first information.

Optionally, the target sequence is at least one of an M sequence, a Gold sequence, a Zadoff-Chu (ZC) sequence, and a fixed sequence; a sequence-related parameter of the target sequence includes at least one of the followings:

an initial value of the M sequence;

an initial parameter of the Gold sequence;

a cyclic shift or a logical root sequence of the ZC sequence; or

a scrambling code for sequence scrambling of the fixed sequence.

Example 1: the energy-efficiency signal is an M sequence

The energy-efficiency signal is an M sequence of length $N=2^n-1$, where n is the order of the generation polynomial of the M sequence. The neighbor cell list is specifically shown in Table 1, where the sequence-related parameter is associated with the cell identifier information. The neighbor cell list can be configured through a higher-layer signaling. Here, the sequence-related parameter may be an initial value of the M sequence or a cyclic shift. The cell identifier information may be a cell ID or a cell list index value. The serving cell may be included in the cell list, or the relevant information may be defined by a protocol.

Table 1

| Cell List Index | Cell Identifier Information 1 (e.g., Cell ID) | Cell Identifier Information 2 (e.g., Sequence-Related Parameters) |
|---|---|---|
| Index 1 | Identifier Information 1 of Cell 1 | Sequence-Related Parameter Value 1 |
| Index 2 | Identifier Information 1 of Cell 2 | Sequence-Related Parameter Value 2 |
| ...... | ...... | ...... |
| Index M | Identifier Information 1 of Cell M | Sequence-Related Parameter Value M |

Method 1: for cell 1, the polynomial of the M sequence is: $g(x)=a_n x^n + a_{n-1} x^{n-1} + ... + a_0$. The initial value corresponding to the current cell is: initial value 1: $x(0)=b_0$, $x(1)=b_1,...,x(n-2)=b_{n-2}$, $x(n-1)=b_{n-1}$, where the value in $\{a_n, a_{n-1},...,a_0, b_{n-1},...,b_0,\}$ is 0 or 1. Cells 2 through M correspond to different cyclic shift values. The cyclic shift value may be configured individually, or obtained by index value, or through mod(M).

Method 2: Cells 1 through M correspond to different initial values, and different initial values correspond to cell IDs, or to different index values, or binary sequence values of different index values or cell IDs obtained through $mod(2^n-1)$.

The network side device can detect the corresponding cell identifier information by performing autocorrelation on the M sequence at the sending position of the energy-efficiency signal.

The sequence-related parameter of the energy-efficiency signal may also be information related to the state transition indication of the energy-efficiency cell, that is, when the cell receives a cell associated with the energy-efficiency signal, the specific indication is the first indication information of the energy-efficiency state transition of the energy-efficiency cell or the second indication information for the sending of a specific signal or channel of the energy-efficiency cell. The cell further determines whether it needs to assist or trigger the energy-efficiency state transition of the energy-efficiency cell or the sending of the energy-efficiency cell specific signal or channel based on an energy-efficiency signal detection result.

Example 2: the energy-efficiency signal is a Gold sequence

The energy-efficiency signal is a Gold sequence of length $N=2^n-1$, where n is the order of the generation polynomial of the M sequence that constitutes the Gold sequence. The generation polynomial of the Gold sequence is $g(x) = go(x) + g_1(x)$, where $go(x)$ and $g_1(x)$ are M sequences respectively. The generation of neighbor cell list follows Table 1, where the sequence-related parameter is associated with the cell identifier information. Here, the sequence-related parameter may be the initial value of the Gold sequence or a cyclic shift. The cell identifier information may be a cell ID or a cell list index value. The serving cell may be included in the cell list, or the relevant information may be defined by a protocol. The details are the same as those for the M sequence.

The energy-efficiency signal may also be the first indication information of the state transition of the energy-efficiency cell, or the second indication information for the sending of a specific signal or channel of the energy-efficiency cell. The details are the same as those for the M sequence.

Example 3: the energy-efficiency signal is a ZC sequence

The energy-efficiency signal is a ZC sequence, where the ZC sequence-related parameter may be a ZC root sequence or a cyclic shift.

$$z_r[n]=\exp[-j\pi r n(n+1)/N_{zc}]$$

In the above formula, r is the root index of the sequence, $r \in \{1,...,(N_{zc}-1)\}$, Nzc is the length of the ZC sequence, and $n=0,1,..., N_{zc}-1$.

The cyclic shift or logical root sequence can be associated with the cell identifier information, and the cell identifier information may be a cell ID or a cell list index value. The serving cell may be included in the cell list, or the relevant information can be defined by a protocol. The details are the same as those for the M sequence.

The energy-efficiency signal may also be the first indication information of the state transition of the energy-efficiency cell, or the second indication information for the sending of a specific signal or channel of the energy-efficiency cell. It is the same as the M sequence.

Example 4: energy-efficiency signal is a fixed sequence

The energy-efficiency signal is a fixed sequence. By scrambling the sequence, different information can be carried, such as different cells use different scrambling codes, the first indication information of the state transition of the energy-efficiency cell, the second indication information for the sending of a specific signal/channel, etc. The fixed sequence may be configured through a higher-layer signaling or a pre-agreed sequence.

For example, the scrambling sequence can be expressed as $b^* = (b+c)$ mod 2, where mod 2 represents the modulo 2 operation, b is a fixed sequence, and c is the scrambling code sequence. The scrambling code sequence is generally a pseudo-random sequence. The initial value of the scrambling code sequence can be associated with at least one of the following information:

related information about the cell identifier, such as cell ID;
the Radio Network Temporary Identifier (RNTI) of the UE;
the Radio Network Temporary Identifier (RNTI) of the cell;
the first indication information of the state transition of the energy-efficiency cell, such as {0, 1};
the state transition indication information sequence of the energy-efficiency cell, such as {function 1 indication, function 2 indication...}, different function indications may be limited bits or a specific sequence;
the second indication information for indicating the sending of a specific signal/channel, such as {0, 1}; or
the indication information sequence for the sending of a specific signal/channel, {signal/channel 1 indication, signal/channel 2 indication...}, different signal/channel indication information may be limited bits or a specific sequence.

The network side device detects the energy-efficiency signal and further determines whether it carries relevant information of the cell identifier and/or first indication information of the state transition of the energy-efficiency cell and/or second indication information for sending a specific signal/channel based on the scrambled code.

In another optional embodiment, an uplink control channel or an MAC signaling or user assistance information includes a preset bit field, and the preset bit field is used to carry the first information.

For example, the energy-efficiency signal may be the uplink control channel, such as a PUCCH, which carries energy-efficiency cell (i.e., cell in an energy-efficiency state) related information through N-bit PUCCH information, and the N-bit information may be a bit map of an energy-efficiency cell or an energy-efficiency cell group, or an index of an energy-efficiency cell (group) list. It may also be first indication information for indicating the state transition of the energy-efficiency cell, or second indication information for indicating the sending of a specific signal or channel of the energy-efficiency cell.

For another example, the energy-efficiency signal may also be an MAC signaling, such as Medium Access Control Control Element (MAC CE), with M bytes in the MAC CE, where M is an integer greater than or equal to 0, corresponding to 8*M bits. These bits are respectively associated with the identifiers of the energy-efficiency cell or energy-efficiency cell group. For example: the association may be a bit map, or an index of an energy-efficiency cell list. It may also be first indication information for indicating the state transition of the energy-efficiency cell, or second indication information for indicating the sending of the specific signal or channel of the energy-efficiency cell.

In at least one optional embodiment of the present disclosure, before step 201, the method further includes: determining second information based on a signaling configuration and/or a pre-agreement of the serving cell; wherein the second information includes at least one of the followings:

relevant information for determining a transmission occasion of the energy-efficiency signal;
relevant information about the cell in the energy-efficiency state;
relevant information about signal sending by the cell in the energy-efficiency state; or
relevant information for generating the energy-efficiency signal.

Optionally, a signaling for configuring the second information refers to at least one of a broadcast signaling, a common signaling, or a terminal-specific signaling.

Optionally, the relevant information used to determine the transmission occasion of the energy-efficiency signal includes at least one of the time domain resource, the frequency domain resource, the spatial domain resource, or the code domain resource of the transmission occasion.

Optionally, the relevant information about the cell in the energy-efficiency state includes at least one of the followings:

identifier information of a cell in an energy-efficiency state; for example, cell ID;

an association between the cell in the energy-efficiency state and the energy-efficiency signal;

an association between the cell in the energy-efficiency state and a transmission occasion of the energy-efficiency signal; or

configuration information of a reference signal or channel sent by the cell in the energy-efficiency state.

Optionally, "identifier information of a cell in an energy-efficiency state" is used to identify relevant information of a neighbor cell in an energy-efficiency state, such as a cell ID of the neighbor cell, a cell list, a neighbor cell related identifier (such as a sending position of an SSB), etc. Here, the cell list includes at least the cell in the energy-efficiency state. The relevant information of the neighbor cell may be carried in the energy-efficiency signal sent by the terminal by an explicit or implicit method, or may be implicitly indicated by a transmission occasion.

Optionally, "an association between the cell in the energy-efficiency state and the energy-efficiency signal" can be understood as the energy-efficiency signal being a UE-level signal. Taking the energy-efficiency signal carrying neighbor cell identifier information as an example, the energy-efficiency signal is a UE-specific signal or a group-common signal, which means that, different "UEs or UE groups" generate different energy-efficiency signal sequences. The neighbor cell identifier information carried by the energy-efficiency signals sent by different UEs can be the same or different. The transmission occasion for the energy-efficiency signal is "UE-specific or UE group-common", that is, the transmission occasion for the energy-efficiency signal differs among different "UEs or UE groups". For example, when a serving cell (such as Cell A) receives an energy-efficiency signal sent by a UE, it can obtain the neighbor cell indicated or assist-indicated by the UE, such as Cell B, based on the neighbor cell identifier information carried by the UE. This method can reduce the collision probability of "UE or UE group" and enable the base station to obtain neighbor cell information more accurately.

Optionally, an association between the cell in the energy-efficiency state and a transmission occasion of the energy-efficiency signal can be understood as the energy-efficiency signal being a cell-level signal. In this case, the energy-efficiency signal sequence generated by the "UE or UE group" can be the same, and the "UE or UE group" in the cell can be allocated the same transmission occasion to send the energy-efficiency signal, and different transmission occasions or transmission occasion sets indicate different neighbor cell identifier information. This method can save sequence resource of the energy-efficiency signal, and only the transmission occasion is used to distinguish the neighbor cells to be awakened.

Optionally, the configuration information of the reference signal or channel sent by the cell in the energy-efficiency state, wherein the reference signal or channel sent by the cell in the energy-efficiency state may be at least one of the followings:

1) reference signal and/or channel configured in the normal state (i.e., non-energy-efficiency state);

2) reference signal used for measurement and/or initial synchronization, such as PSS+SSS, or a reference signal specific for measurement and/or initial synchronization in the energy-efficiency state;

3) reference signal capable of obtaining downlink synchronization, such as an SSB, an energy-efficiency-specific reference signal (with System Frame Number (SFN) related information), a TRS, etc., or a specific reference signal configured for downlink synchronization in the energy-efficiency state of the base station;

4) reference signal used for uplink synchronization, such as a PDCCH carrying a TA and/or a preamble sent by a receiving terminal, or the specific reference signal for uplink synchronization configured in the energy-efficiency state of the base station; or

5) physical layer channel information in the energy-efficiency state of the base station, such as the PDCCH, the PUCCH, etc. The receiving occasion and/or transmission occasion of the physical layer channel information in the energy-efficiency state of the base station may be a subset or a full set of the receiving occasion and/or transmission occasion set of the physical layer channel information in the non-energy-efficiency state (also referred to as a normal state), or may be a specific receiving occasion and/or transmission occasion configured in the energy-efficiency state of the base station.

Optionally, at least one embodiment of the present disclosure further includes at least one of the followings.

The relevant information for generating the energy-efficiency signal is associated with the relevant information for determining the transmission occasion of the energy-efficiency signal.

Optionally, the relevant information of the energy-efficiency signal generation can have a certain correspondence with the relevant information of the transmission occasion, and the terminal can generate the corresponding energy-efficiency signal based on the transmission occasion, and the network side device can determine the corresponding transmission occasion related information based on the detected energy-efficiency signal.

For example, taking the energy-efficiency signal as an M sequence as an example, the initial value or cyclic shift of the M sequence has a certain correspondence with the transmission occasion of the energy-efficiency signal. When the terminal determines the transmission occasion based on the relevant information of the transmission occasion, it may also determine the initial value or cyclic shift of the M sequence associated with the transmission occasion. Taking the energy-efficiency signal as a Gold sequence as an example, when the terminal determines the transmission occasion based on the relevant information of the transmission occasion, it may also determine the initial parameter or cyclic shift of the Gold sequence associated with the transmission occasion. The energy-efficiency signal may also be a cyclic shift or a logical root sequence of a ZC sequence, and any of the scrambling codes of the sequence scrambling of the fixed sequence has a certain correspondence with the transmission occasion of the energy-efficiency signal. These examples are not exhaustive.

Alternatively, the relevant information for generating the energy-efficiency signal is associated with the relevant information of the cell in the energy-efficiency state.

Optionally, the relevant information for generating the energy-efficiency signal is associated with the relevant information of the energy-efficiency cell, and the terminal can generate the corresponding energy-efficiency signal based on the energy-efficiency cell, and the network side device can determine the corresponding energy-efficiency cell related information based on the detected energy-efficiency signal.

For example, taking the energy-efficiency signal as a ZC sequence as an example, the root sequence or cyclic shift of the ZC sequence has a certain correspondence with the relevant information of the cell. Taking the relevant information of the cell in the energy-efficiency state as the cell ID as an example, when the terminal determines the cell ID based on the relevant information of the cell in the energy-efficiency state, it may also determine the root sequence or cyclic shift of the associated ZC sequence. The energy-efficiency signal may also be at least one of an M sequence, a Gold sequence or a fixed sequence, then any one of the initial value or cyclic shift of the M sequence, the initial parameter or cyclic shift of the Gold sequence, and the scrambling code or cyclic shift of the fixed sequence has a certain correspondence with the relevant information of the cell. These examples are not exhaustive.

Alternatively, the relevant information for energy-efficiency signal generation is associated with the relevant information for determining the transmission occasion of the energy-efficiency signal and the relevant information of the cell in the energy-efficiency state.

Optionally, the relevant information for energy-efficiency signal generation is associated with the relevant information for the transmission occasion and the relevant information of the energy-efficiency cell, and the terminal can generate the corresponding energy-efficiency signal based on the transmission occasion and the energy-efficiency cell, and the network side device can determine the corresponding transmission occasion related information and energy-efficiency cell related information based on the detected energy-efficiency signal.

For example, taking the energy-efficiency signal as a fixed sequence and the relevant information of the cell in the energy-efficiency state as the cell ID, when the terminal determines the cell ID based on the relevant information of the cell in the energy-efficiency state and the transmission occasion based on the relevant information of the transmission occasion, it may also determine the scrambling code or cyclic shift of the fixed sequence associated with the cell ID and the transmission occasion. The energy-efficiency signal may also be at least one of an M sequence, a Gold sequence or a ZC sequence, and any one of the initial value or cyclic shift of the M sequence, the initial parameter or cyclic shift of the Gold sequence, and the root sequence or cyclic shift of the ZC sequence has a certain correspondence with the transmission occasion related information and the cell related information. These examples are not exhaustive.

Alternatively, the relevant information for generating the energy-efficiency signal is associated with the first indication information.

Optionally, the network side device can detect the relevant information of the state transition indication of the energy-efficiency cell by performing autocorrelation on the energy-efficiency signal at the sending position of the energy-efficiency signal, and when the cell associated with the energy-efficiency signal is detected, the specific indication is the first indication information of the energy-efficiency state transition of the energy-efficiency cell. The cell further determines whether it needs to assist or trigger the energy-efficiency state transition of the energy-efficiency cell based on an energy-efficiency signal detection result.

Alternatively, the relevant information for generating the energy-efficiency signal is associated with the second indication information.

Optionally, the network side device can detect the relevant information of the state transition indication of the energy-efficiency cell by performing autocorrelation on the energy-efficiency signal at the sending position of the energy-efficiency signal, and when the cell associated with the energy-efficiency signal is detected, the specific indication is the second indication information for the sending the specific signal or channel of the energy-efficiency cell. The cell further determines whether it needs to assist or trigger the sending of the specific signal or channel of the energy-efficiency cell based on the energy-efficiency signal detection result.

It should be noted that in the embodiments of the present disclosure, "two pieces of information with an associative relationship" can be understood as the terminal and the network side can determine the other information based on one piece of the information and the corresponding associative relationship, and this approach can save the resources required for information configuration.

In an implementation, the terminal determines the transmission occasion of the energy-efficiency signal based on the determined second information and/or a pre-agreement, and generates the corresponding energy-efficiency signal.

In summary, in the embodiments of the present disclosure, the terminal sends an energy-efficiency signal to the network side device, and the cell in the energy-efficiency state performs the state-transition related operation based on the energy-efficiency signal to achieve dynamic network energy efficiency, thereby dynamically providing services to the terminal.

As shown in Fig. 3, the embodiments of the present disclosure further provide a state transition method, performed by a network side device, the method including:

step 301: receiving an energy-efficiency signal sent by a terminal;

step 302: assisting or triggering, based on the energy-efficiency signal, a cell in an energy-efficiency state to perform a state-transition related operation;

wherein the cell in the energy-efficiency state includes: at least one serving cell of the terminal, and/or at least one neighbor cell of the serving cell (optionally including multiple neighbor cells of the serving cell).

As an optional embodiment, for a cell in an energy-efficiency state, no reference signal is sent or only a sparse reference signal is sent. Specifically, the cell in the energy-efficiency state may exhibit one or more of the following behaviors:

a) sending no signal;

b) sending the reference signal for measurement and/or initial synchronization, such as a Primary Synchronisation Signal (PSS) and a Secondary Synchronisation Signal (SSS);

c) sending the reference signal that can obtain downlink synchronization, such as a Synchronization Signal and PBCH block (SSB), an energy-efficiency-specific reference signal (with System Frame Number (SFN) related information), a Tracking Reference Signal (TRS), etc., or a specific reference signal configured for downlink synchronization in the energy-efficiency state of the base station;

d) receiving and/or sending the reference signal for uplink synchronization, such as a Physical Downlink Control Channel (PDCCH) carrying a Tracking Area (TA) and/or a preamble sent by the receiving terminal, or the specific reference signal for uplink synchronization configured in the energy-efficiency state of the base station; or

e) receiving and/or sending physical layer channel information of the base station in the energy-efficiency state, such as the PDCCH, a Physical Uplink Control Channel (PUCCH), etc. A receiving occasion and/or a transmission occasion of the physical layer channel information in the energy-efficiency state of the base station may be a subset or a full set of the receiving occasion and/or transmission occasion set of the physical layer channel information in the non-energy-efficiency state (also referred to as a normal state), or may be a specific receiving occasion and/or transmission occasion configured in the energy-efficiency state of the base station.

As another optional embodiment, the present disclosure primarily relates to the following four scenarios.

Scenario 1: the network side device is the serving cell of the terminal, and the cell in the energy-efficiency state is at least one neighbor cell of the serving cell; in other words, the terminal sends an energy-efficiency signal to the serving cell, and the neighbor cell of the serving cell is in the energy-efficiency state. Accordingly, the energy-efficiency signal is used to assist the neighbor cell to perform a state-transition related operation.

In this scenario, after receiving the energy-efficiency signal sent by the terminal, the serving cell indicates the cell in the energy-efficiency state (the neighbor cell of the serving cell) to perform a state transition based on the information carried by the energy-efficiency signal.

Scenario 2: the network side device is the neighbor cell of the serving cell, and the cell in the energy-efficiency state is the neighbor cell; in other words, the terminal sends an energy-efficiency signal to the neighbor cell of the serving cell, and the neighbor cell of the serving cell is in the energy-efficiency state. Accordingly, the energy-efficiency signal is used to trigger the neighbor cell to perform the state-transition related operation.

In this scenario, after receiving the energy-efficiency signal sent by the terminal, the neighbor cell of the serving cell performs the state transition based on the information carried by the energy-efficiency signal.

Scenario 3: the network side device is the serving cell of the terminal, and the cell in the energy-efficiency state is the serving cell; in other words, the terminal sends an energy-efficiency signal to the serving cell, and the serving cell is in the energy-efficiency state. Accordingly, the energy-efficiency signal is used to trigger the serving cell to perform the state-transition related operation.

In this scenario, after receiving the energy-efficiency signal sent by the terminal, the serving cell performs the state transition based on the information carried by the energy-efficiency signal.

Scenario 4: the network side device is a primary serving cell or a secondary serving cell of the terminal, the cell in the energy-efficiency state is at least one of: the secondary serving cell, a neighbor cell of the primary serving cell, or a neighbor cell of the secondary serving cell. This scenario applies to a Carrier Aggregation (CA) scenario where the terminal sends an energy-efficiency signal to the primary serving cell or the secondary serving cell, and the secondary serving cell or the neighbor cell of the secondary serving cell or the neighbor cell of the primary serving cell is in the energy-efficiency state. Accordingly, the energy-efficiency signal is used to assist or trigger the cell in the energy-efficiency state to perform the state-transition related operation.

In this scenario, after receiving the energy-efficiency signal sent by the terminal, the primary serving cell or the secondary serving cell indicates the cell in the energy-efficiency state (the neighbor cell of the serving cell or the secondary serving cell) to perform the state transition based on the information carried by the energy-efficiency signal.

It should be noted that the "state-transition related operation" mentioned in this application may be a one-way transition or a two-way transition.

In at least one embodiment of the present disclosure, a state-transition related operation described in "one-way transition" includes at least one of the followings:

switching from the energy-efficiency state to a non-energy-efficiency state; or
sending a specific reference signal or channel.

The non-energy-efficiency state may also be called a regular service state; "switching from the energy-efficiency state to a non-energy-efficiency state" may be understood as waking up a cell in energy-efficiency state, or turning on the cell, or turning off the energy-efficiency state of a cell, or controlling a cell in energy-efficiency state to resume service, etc., which is not specifically limited herein.

Optionally, the above-mentioned specific reference signal or channel may be a known signal, or a signal in a non-energy-efficiency state. This situation may be understood as that a cell in an energy-efficiency state only sends a subset of the signals configured in a regular service state, or that a cell in an energy-efficiency state only sends a sparse reference signal; the cell in the energy-efficiency state sending the specific reference signal or channel is equivalent to implicitly or indirectly indicating that it switches to a regular service state. For example, the sending the specific reference signal or channel is sending a synchronization reference signal block SSB under a regular configuration.

Optionally, the above-mentioned specific reference signal or channel may be a signal or channel used only in an energy-efficiency state, or may be understood as a reference signal or channel for a specific purpose. For example, the above-mentioned specific reference signal or channel is a signal configured in the energy-efficiency state; for another example, the sending the specific reference signal or channel is sending a PDCCH carrying a TA.

Optionally, the state-transition related operation described in the "two-way transition" may be understood as a transition between the energy-efficiency state and the non-energy-efficiency state of the cell, or a transition between turning off the cell and turning on the cell.

In at least one optional embodiment of the present disclosure, the method further includes:

configuring a second condition for the terminal through a signaling; wherein the second condition is a triggering condition of the energy-efficiency signal, and a signaling for configuring the second condition includes at least one of a broadcast signaling, a common signaling, or a terminal-specific signaling. Accordingly, the terminal determines a first condition based on a network signaling and/or a pre-agreement, wherein the first condition includes the second condition and/or a third condition, wherein the second condition is determined by a signaling configuration, and the third condition is determined by the pre-agreement.

Optionally, the first condition includes at least one of the followings:

a specific measurement threshold condition;
a specific service condition;
a location information condition;
a timer condition for sending the energy-efficiency signal;
a channel state information condition; or
a synchronization condition.

In another optional embodiment of the present application, the energy-efficiency signal carries first information, and the first information includes at least one of the followings:

relevant information about the cell in the energy-efficiency state;
first indication information for indicating the cell in the energy-efficiency state to perform a state transition; or
second indication information for indicating the cell in the energy-efficiency state to send a specific signal or channel.

The first indication information can be used for at least one of the following purposes。

1) Time domain energy-efficiency related function indication:

assisting in indicating or triggering the base station (the base station corresponding to the cell in the energy-efficiency state) to send a reference signal or send, based on a specific sending pattern, a reference signal;

assisting in indicating or triggering the base station (the base station corresponding to the cell in the energy-efficiency state) to send a channel, or send, based on a relevant parameter or a configured sending pattern, a channel; here, the channel includes at least one of a physical layer control channel, a physical layer shared channel, or a physical layer broadcast channel;

assisting in indicating or triggering the base station (the base station corresponding to the cell in the energy-efficiency state) to receive a reference signal or receive a reference signal based on a specific receiving pattern;

assisting in indicating or triggering the base station (the base station corresponding to the cell in the energy-efficiency state) to receive a channel, or receive, based on a relevant parameter or a configured sending pattern, a channel; here, the channel includes at least one of a physical layer control channel, a physical layer shared channel, or a physical layer broadcast channel;

assisting in indicating or triggering the cell to be turned off or be turned on;

assisting in indicating or triggering a transition between the normal state and the energy-efficiency state of a cell;

the above-mentioned specific sending pattern or receiving pattern refers to a resource location set in the time domain under a specific parameter configuration.

2) Frequency domain energy-efficiency related function indication:

assisting in indicating or triggering the base station (the base station corresponding to the cell in the energy-efficiency state) to perform a frequency-domain resource bandwidth adjustment for sending the signal or channel, such as adjusting to a target size transmission bandwidth, or adjusting to a target transmission bandwidth, etc. The target size transmission bandwidth or the target transmission bandwidth may be configured by a higher-layer signaling, or may be pre-agreed, or may be determined by the bandwidth associated with different starting positions or ending positions;

assisting in indicating or triggering the base station (the base station corresponding to the cell in the energy-efficiency state) to perform a frequency-domain resource carrier frequency adjustment for sending the signal or channel, such as a transition between multi-carrier and single carrier, adjustment of the quantity of secondary cells, carrier switching of the energy-efficiency cell, turning on/off secondary cell, etc.

3) Spatial domain energy-efficiency-related function indication:

assisting in indicating or triggering the adjustment of the related information of the spatial domain unit (such as an antenna unit/a sending-receiving unit TxRU/an antenna array/an antenna port/a sending-receiving point TxRP) sent/received by the base station (the base station corresponding to the cell in the energy-efficiency state). The adjusted relevant information of the spatial domain unit may be configured through higher-layer signaling or may be pre-agreed.

assisting in indicating or triggering the adjustment of the related information of the reference signal of the associated spatial domain information sent/received by the base station (the base station corresponding to the cell in the energy-efficiency state).

4) Power domain energy-efficiency related function indication:

assisting in indicating or triggering the adjustment of the relevant information of the power of the reference signal/channel sent/received by the base station (the base station corresponding to the cell in the energy-efficiency state);

assisting in indicating or triggering the adjustment of the relevant information of a relevant parameter factor in a power algorithm sent/received by the base station (the base station corresponding to the cell in the energy-efficiency state).

For the purpose of the above energy-efficiency signal, one or a combination of the following modes can be used.

The energy-efficiency signal is used for assisting in indicating or triggering of at least one of the above purposes, and the specific purpose configuration may be configured through broadcast information or a higher-layer signaling, or may be pre-agreed.

The second indication information can indicate the cell in the energy-efficiency state to receive and/or send at least one of the followings:

1) reference signal and/or channel configured in the normal state (i.e., non-energy-efficiency state);

2) reference signal used for measurement and/or initial synchronization, such as PSS+SSS;

3) reference signal that can obtain downlink synchronization, such as a Synchronization Signal and PBCH block (SSB), an energy-efficiency-specific reference signal (with System Frame Number (SFN) related information), a Tracking Reference Signal (TRS), etc., or a specific reference signal configured for downlink synchronization in the energy-efficiency state of the base station;

4) reference signal used for uplink synchronization, such as a Physical Downlink Control Channel (PDCCH) carrying a Tracking Area (TA) and/or a preamble sent by the receiving terminal, or the specific reference signal for uplink synchronization configured in the energy-efficiency state of the base station; or

5) physical layer channel information of the base station in the energy-efficiency state, such as the PDCCH, a Physical Uplink Control Channel (PUCCH), etc. The receiving occasion and/or transmission occasion of the physical layer channel information in the energy-efficiency state of the base station may be a subset or a full set of the receiving occasion and/or transmission occasion set of the physical layer channel information in the non-energy-efficiency state (also referred to as a normal state), or may be a specific receiving occasion and/or transmission occasion configured in the energy-efficiency state of the base station.

In at least one optional embodiment of the present disclosure, the energy-efficiency signal is a target sequence, or an uplink control channel, or a Medium Access Control (MAC) signaling, or user assistance information.

In an optional implementation, a sequence-related parameter of the target sequence is associated with the first information.

Optionally, the target sequence is at least one of an M sequence, a Gold sequence, a Zadoff-Chu (ZC) sequence, and a fixed sequence; a sequence-related parameter of the target sequence includes at least one of the followings:

an initial value of the M sequence;

an initial parameter of the Gold sequence;

a cyclic shift or a logical root sequence of the ZC sequence; or

a scrambling code for sequence scrambling of the fixed sequence.

In another optional embodiment, the uplink control channel or the MAC signaling or the user assistance information includes a preset bit field, and the preset bit field is used to carry first information.

For example, the energy-efficiency signal may be the uplink control channel, such as a PUCCH, which carries energy-efficiency cell (i.e., cell in an energy-efficiency state) related information through N-bit PUCCH information, and the N-bit information may be a bit map of an energy-efficiency cell or an energy-efficiency cell group, or an index of an energy-efficiency cell (group) list. It may also be first indication information for indicating the state transition of the energy-efficiency cell, or second indication information for indicating the sending of the specific signal or channel of the energy-efficiency cell.

For another example, the energy-efficiency signal may also be an MAC signaling, such as Medium Access Control Control Element (MAC CE), with M bytes in the MAC CE, where M is an integer greater than or equal to 0, corresponding to 8*M bits. These bits are respectively associated with the identifier of the energy-efficiency cell or energy-efficiency cell group. For example: the association may be a bit map, or an index of an energy-efficiency cell list. It may also be first indication information for indicating the state transition of the energy-efficiency cell, or second indication information for indicating the sending of a specific signal or channel of the energy-efficiency cell.

In at least one optional embodiment of the present disclosure, before step 301, the method further includes: configuring part or all of the second information for the terminal through a signaling; wherein the second information includes at least one of the followings:

relevant information for determining a transmission occasion of the energy-efficiency signal;

relevant information about the cell in the energy-efficiency state;

relevant information about signal sending by the cell in the energy-efficiency state; or

relevant information for generating the energy-efficiency signal.

Optionally, the signaling for configuring the second condition includes at least one of a broadcast signaling, a common signaling, or a terminal-specific signaling.

Optionally, the relevant information used to determine the transmission occasion of the energy-efficiency signal includes at least one of the time domain resource, the frequency domain resource, the spatial domain resource, or the code domain resource of the transmission occasion.

Optionally, the relevant information about the cell in the energy-efficiency state includes at least one of the followings:

identifier information of a cell in an energy-efficiency state; for example, cell ID;
an association between the cell in the energy-efficiency state and the energy-efficiency signal;
an association between the cell in the energy-efficiency state and a transmission occasion of the energy-efficiency signal; or
configuration information of a reference signal or channel sent by the cell in the energy-efficiency state.

Optionally, "identifier information of a cell in an energy-efficiency state" is used to identify relevant information of a neighbor cell in an energy-efficiency state, such as a cell ID of the neighbor cell, a cell list, a neighbor cell related identifier (such as a sending position of an SSB), etc. Here, the cell list includes at least the cell in the energy-efficiency state. The relevant information of the neighbor cell may be carried in the energy-efficiency signal sent by the terminal by an explicit or implicit method, or may be implicitly indicated by a transmission occasion.

Optionally, "an association between the cell in the energy-efficiency state and the energy-efficiency signal" can be understood as the energy-efficiency signal being a UE-level signal. Taking the energy-efficiency signal carrying neighbor cell identifier information as an example, the energy-efficiency signal is a UE-specific signal or a group-common signal, which means that, different "UEs or UE groups" generate different energy-efficiency signal sequences. The neighbor cell identifier information carried by the energy-efficiency signals sent by different UEs can be the same or different. The transmission occasion for the energy-efficiency signal is "UE-specific or UE group-common", that is, the transmission occasion for the energy-efficiency signal differs among different "UEs or UE groups". For example, when a serving cell (such as Cell A) receives an energy-efficiency signal sent by a UE, it can obtain the neighbor cell indicated or assist-indicated by the UE, such as Cell B, based on the neighbor cell identifier information carried by the UE. This method can reduce the collision probability of "UE or UE group" and enable the base station to obtain neighbor cell information more accurately.

Optionally, an association between the cell in the energy-efficiency state and a transmission occasion of the energy-efficiency signal can be understood as the energy-efficiency signal being a cell-level signal. In this case, the energy-efficiency signal sequence generated by the "UE or UE group" can be the same, and the "UE or UE group" in the cell can be allocated the same transmission occasion to send the energy-efficiency signal, and different transmission occasions or transmission occasion sets indicate different neighbor cell identifier information. This method can save sequence resource of the energy-efficiency signal, and only the transmission occasion is used to distinguish the neighbor cells to be awakened.

Optionally, the configuration information of the reference signal or channel sent by the cell in the energy-efficiency state, wherein the reference signal or channel sent by the cell in the energy-efficiency state may be at least one of the followings:

1) reference signal and/or channel configured in the normal state (i.e., non-energy-efficiency state);
2) reference signal used for measurement and/or initial synchronization, such as PSS+SSS, or a reference signal specific for measurement and/or initial synchronization in the energy-efficiency state;
3) reference signal capable of obtaining downlink synchronization, such as an SSB, an energy-efficiency-specific reference signal (with System Frame Number (SFN) related information), a TRS, etc., or a specific reference signal configured for downlink synchronization in the energy-efficiency state of the base station;
4) reference signal used for uplink synchronization, such as a PDCCH carrying a TA and/or a preamble sent by a receiving terminal, or the specific reference signal for uplink synchronization configured in the energy-efficiency state of the base station; or
5) physical layer channel information in the energy-efficiency state of the base station, such as the PDCCH, the PUCCH, etc. The receiving occasion and/or transmission occasion of the physical layer channel information in the energy-efficiency state of the base station may be a subset or a full set of the receiving occasion and/or transmission occasion set of the physical layer channel information in the non-energy-efficiency state (also referred to as a normal state), or may be a specific receiving occasion and/or transmission occasion configured in the energy-efficiency state of the base station.

Optionally, at least one embodiment of the present disclosure further includes at least one of the followings.

The relevant information for generating the energy-efficiency signal is associated with the relevant information for determining the transmission occasion of the energy-efficiency signal.

Optionally, the relevant information of the energy-efficiency signal generation can have a certain correspondence with the relevant information of the transmission occasion, and the terminal can generate the corresponding energy-efficiency signal based on the transmission occasion, and the network side device can determine the corresponding transmission occasion related information based on the detected energy-efficiency signal.

For example, taking the energy-efficiency signal as an M sequence as an example, the initial value or cyclic shift of the M sequence has a certain correspondence with the transmission occasion of the energy-efficiency signal. When the terminal determines the transmission occasion based on the relevant information of the transmission occasion, it may also determine the initial value or cyclic shift of the M sequence associated with the transmission occasion. Taking the energy-efficiency signal as a Gold sequence as an example, when the terminal determines the transmission occasion based on the relevant information of the transmission occasion, it may also determine the initial parameter or cyclic shift of the Gold sequence associated with the transmission occasion. The energy-efficiency signal may also be a cyclic shift or a logical root sequence of a ZC sequence, and any of the scrambling codes of the sequence scrambling of the fixed sequence has a certain correspondence with the transmission occasion of the energy-efficiency signal. These examples are not exhaustive.

Alternatively, the relevant information for generating the energy-efficiency signal is associated with the relevant information of the cell in the energy-efficiency state.

Optionally, the relevant information for generating the energy-efficiency signal is associated with the relevant information of the energy-efficiency cell, and the terminal can generate the corresponding energy-efficiency signal based on the energy-efficiency cell, and the network side device can determine the corresponding energy-efficiency cell related information based on the detected energy-efficiency signal.

For example, taking the energy-efficiency signal as a ZC sequence as an example, the root sequence or cyclic shift of the ZC sequence has a certain correspondence with the relevant information of the cell. Taking the relevant information of the cell in the energy-efficiency state as the cell ID as an example, when the terminal determines the cell ID based on the relevant information of the cell in the energy-efficiency state, it may also determine the root sequence or cyclic shift of the associated ZC sequence. The energy-efficiency signal may also be at least one of an M sequence, a Gold sequence or a fixed sequence, then any one of the initial value or cyclic shift of the M sequence, the initial parameter or cyclic shift of the Gold sequence, and the scrambling code or cyclic shift of the fixed sequence has a certain correspondence with the relevant information of the cell. These examples are not exhaustive.

Alternatively, the relevant information for energy-efficiency signal generation is associated with the relevant information for determining the transmission occasion of the energy-efficiency signal and the relevant information of the cell in the energy-efficiency state.

Optionally, the relevant information for energy-efficiency signal generation is associated with the relevant information for the transmission occasion and the relevant information of the energy-efficiency cell, and the terminal can generate the corresponding energy-efficiency signal based on the transmission occasion and the energy-efficiency cell, and the network side device can determine the corresponding transmission occasion related information and energy-efficiency cell related information based on the detected energy-efficiency signal.

For example, taking the energy-efficiency signal as a fixed sequence and the relevant information of the cell in the energy-efficiency state as the cell ID, when the terminal determines the cell ID based on the relevant information of the cell in the energy-efficiency state and the transmission occasion based on the relevant information of the transmission occasion, it may also determine the scrambling code or cyclic shift of the fixed sequence associated with the cell ID and the transmission occasion. The energy-efficiency signal may also be at least one of an M sequence, a Gold sequence or a ZC sequence, and any one of the initial value or cyclic shift of the M sequence, the initial parameter or cyclic shift of the Gold sequence, and the root sequence or cyclic shift of the ZC sequence has a certain correspondence with the transmission occasion related information and the cell related information. These examples are not exhaustive.

Alternatively, the relevant information for generating the energy-efficiency signal is associated with the first indication information.

Optionally, the network side device can detect the relevant information of the state transition indication of the energy-efficiency cell by performing autocorrelation on the energy-efficiency signal at the sending position of the energy-efficiency signal, and when the cell associated with the energy-efficiency signal is detected, the specific indication is the first indication information of the energy-efficiency state transition of the energy-efficiency cell. The cell further determines whether it needs to assist or trigger the energy-efficiency state transition of the energy-efficiency cell based on an energy-efficiency signal detection result.

Alternatively, the relevant information for generating the energy-efficiency signal is associated with the second indication information.

Optionally, the network side device can detect the relevant information of the state transition indication of the energy-efficiency cell by performing autocorrelation on the energy-efficiency signal at the sending position of the energy-efficiency signal, and when the cell associated with the energy-efficiency signal is detected, the specific indication is the second indication information for the sending the specific signal or channel of the energy-efficiency cell. The cell further determines whether it needs to assist or trigger the sending of the specific signal or channel of the energy-efficiency cell based on the energy-efficiency signal detection result.

It should be noted that in the embodiments of the present disclosure, "two pieces of information with an associative relationship" can be understood as the terminal and the network side can determine the other information based on one piece of the information and the corresponding associative relationship, and this approach can save the resources required for information configuration.

In an implementation, the terminal determines the transmission occasion of the energy-efficiency signal based on the determined second information and/or a pre-agreement, and generates the corresponding energy-efficiency signal.

In summary, in the embodiments of the present disclosure, the terminal sends an energy-efficiency signal to the network side device, and the cell in the energy-efficiency state performs the state-transition related operation based on the energy-efficiency signal to achieve dynamic network energy efficiency, thereby dynamically providing services to the terminal.

To more clearly describe the method for sending an energy-efficiency signal and the state transition method provided by the embodiments of the present disclosure, several examples are provided below for explanation.

Example 5

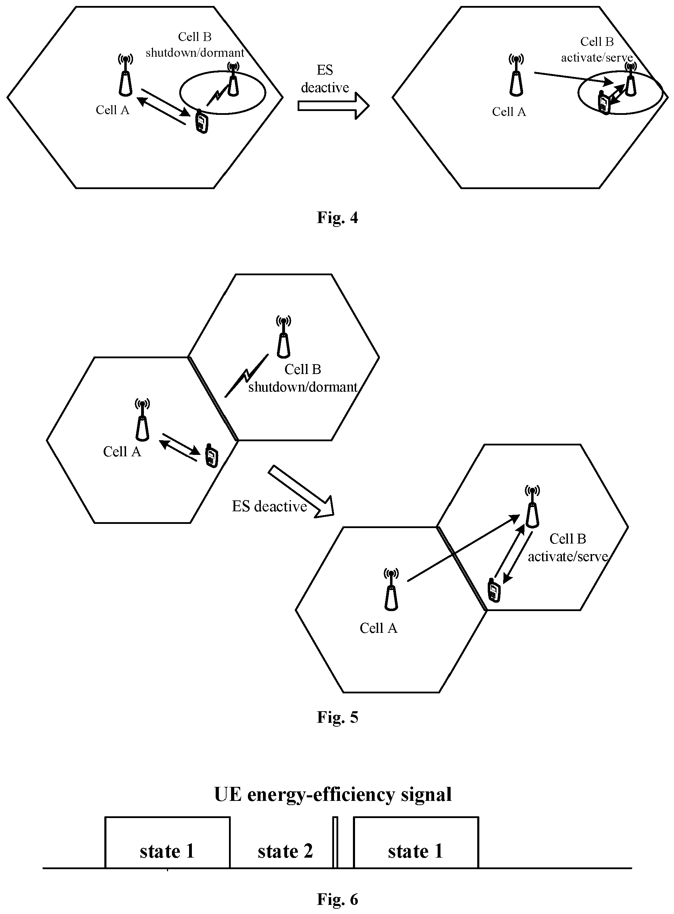

As shown in Fig. 4, a Cell A provides a full coverage cell, and a Cell B is a hotspot cell. When the cell load is low or idle, the Cell B is in an energy-efficiency state;

the Cell A provides at least one of the following configuration information to "UE or UE group or all UEs" through a first signaling.

Relevant information about a transmission occasion of the energy-efficiency signal.

The relevant information about the transmission occasion of the energy-efficiency signal, that is, the time domain resource, frequency domain resource, and spatial domain resource where the transmission occasion of the energy-efficiency signal is located, are used for the terminal to determine the transmission occasion of the energy-efficiency signal.

Relevant information about an energy-efficiency cell, used to identify relevant information of a neighbor cell in the energy-efficiency state, such as a cell ID of the energy-efficiency cell, a cell list, related identifier of the neighbor cell (such as the sending position of an SSB), etc. Here, the cell list includes at least the energy-efficiency cell. The relevant information of the neighbor cell may be carried in the energy-efficiency signal sent by the terminal by an explicit or implicit method, or it may be implicitly indicated by the transmission occasion.

Related information for generating of the energy-efficiency signal. The energy-efficiency signal may be a sequence or a channel or an MAC signaling. The generation of the energy-efficiency signal may be associated with the relevant information about the energy-efficiency cell.

The energy-efficiency signal may also carry relevant information of the energy-efficiency cell, such as a neighbor cell ID or an index value of a neighbor cell list, etc. For details thereof, see the above Example 1 to Example 4.

Conditional information for sending the energy-efficiency signal, such as a measurement threshold, UE location information, a sending timer, channel status information and a specific service requirement, are used for the UE to determine the transmission occasion of the energy-efficiency signal, that is, the energy-efficiency signal is sent only when the conditions are met.

The Cell A is a serving cell, a Primary Cell (PCell), or a Primary Serving Cell (primary serving cell) of the UE.

The first signaling may be at least one of a broadcast signaling, a common signaling, or a terminal-specific signaling.

The Cell B sends a reference signal and/or channel signal in the energy-efficiency state, such as a sparse SSB, a specific reference signal for network energy efficiency, etc. The reference signal and/or channel signal may be based on a parameter configuration of the Cell A, or the parameter configuration unique to the Cell B, or the reference signal and/or channel signal determined under a certain configuration defined by a protocol.

The UE receives the first signaling sent by the Cell A, and performs at least one of the following actions based on the first signaling and/or a pre-agreement

the terminal determines the transmission occasion of the energy-efficiency signal;
the terminal generates the energy-efficiency signal, which may be based on the relevant information about the energy-efficiency cell in the first signaling and/or the relevant information for generating the energy-efficiency signal. For example, different energy-efficiency cells generate different energy-efficiency signal sequences, or the information carried by the energy-efficiency signal indicates different energy-efficiency cells, or the information carried by the energy-efficiency signal indicates the relevant information of the state transition of the energy-efficiency cell.

The UE measures the reference signal and/or channel signal sent by the energy-efficiency cell in the energy-efficiency state, such as a Radio Resource Management (RRM) measurement or a channel quality measurement or a location measurement. Here, the reference signal and/or channel signal sent in the energy-efficiency state, such as a reference signal that can be used for synchronization, a reference signal that can be used for the measurement, a reference signal that can be used for the location measurement, etc.

The UE determines whether to send the energy-efficiency signal based on the conditional information for sending the energy-efficiency signal provided by the serving cell, i.e., Cell A. For example: when the measurement result meets the threshold value requirement for sending the energy-efficiency signal, the threshold value requirement may be higher than or equal to a specific threshold value, or lower than or equal to a specific threshold value; or the location information of the UE meets the location threshold value requirement. When a UE-specific service arrives, such as a large data volume service (such as an XR service).

At the transmission occasion of the energy-efficiency signal, the UE sends the energy-efficiency signal to the Cell A to indicate or assist in indicating the energy-efficiency state transition of the Cell B. For example:

the energy-efficiency signal may explicitly or implicitly indicate the cell identifier of the energy-efficiency cell, enabling the Cell A to know the energy-efficiency cell (group) indicated or assisted by the UE.

For explicit indication, it can be energy-efficiency cell information carried in the energy-efficiency signal, such as scrambling information of the energy-efficiency signal.

For implicit indication, the cell information can be derived based on a detection position of the energy-efficiency signal, wherein the transmission occasion of the energy-efficiency signal is associated with the energy-efficiency cell information.

The energy-efficiency signal can carry the indication information of the state transition of the energy-efficiency cell, such as 1 bit, indicating two states of the energy-efficiency cell: a regular service state or an energy-efficiency state, or the activation/deactivation of a specific state. The N bits indicate the activation or deactivation of different specific functions of the energy-efficiency cell. It may also indicate a specific configuration or specific value of the state transition or specific function.

The energy-efficiency signal may also carry the indication information about the sending of the specific signal or channel by the energy-efficiency cell.

When the UE sends the energy-efficiency signal to the Cell A, the Cell A detects the energy-efficiency signal at the configured transmission occasion of the energy-efficiency signal. When the Cell A detects the energy-efficiency signal at the transmission occasion of the energy-efficiency signal, it directly or indirectly obtains the indication information related to the Cell B carried in the energy-efficiency signal; for example, a scrambling ID is the cell ID, or a sequence corresponds to the index value of a certain cell, etc.

The Cell A can send a wake-up information to Cell B based on a specific wake-up condition. Here, examples of the specific wake-up condition may include an internal algorithm based on the measurement results reported by the UE or the proportion based on the reporting UEs. The wake-up information sent by the Cell A to the Cell B may be new inter-base station interface information, or a "cell activation request" sent through an Xn interface.

In addition, the Cell A may also send the relevant parameter configuration information of the reference signal and/or channel signal in the energy-efficiency state, such as a sparse SSB, a specific reference signal for network energy efficiency (such as a Discovery Signal DRS), etc., to the Cell B. The related parameter configuration information is used to indicate that the Cell B sends the corresponding reference signal and/or channel and/or signals in the energy-efficiency state. And/or, the Cell A sends the relevant information such as time-frequency and spatial resources for sending the corresponding reference signal and/or channel and/or signals in the energy-efficiency state of the Cell B, to the UE. This is used for the UE to measure the energy-efficiency cell and/or determine the transmission occasion of the energy-efficiency signal.

The example may also be applied to the scenario shown in Fig. 5. In this scenario, the differences from the scenario in Fig. 4 are as follows.

The Cell B sends a reference signal and/or channel signal in the energy-efficiency state, such as a sparse SSB, a specific reference signal for network energy efficiency, etc. The reference signal and/or channel signal may be the parameter configuration unique to the Cell B, or the reference signal and/or channel signal determined under a certain configuration defined by a protocol.

The Cell B may also notify the Cell A for the sending of the reference signal and/or channel signal in the energy-efficiency state, such as the sparse SSB, the specific reference signal for network energy efficiency, etc.

The Cell A sends to the UE the time-frequency and spatial resources for the sending of the corresponding reference signal and/or channel and/or signals when the Cell B is in the off/sleep/inactive/energy-efficiency state.

The UE sends the energy-efficiency signal to the Cell B, and the Cell B performs energy-efficiency signal detection at the configured transmission occasion of the energy-efficiency signal.

The Cell B detects the UE energy-efficiency signal at the transmission occasion of the energy-efficiency signal. When the Cell B detects that the UE sends the energy-efficiency signal, it determines whether to be awakened based on a Cell B wake-up strategy, or wakes up directly. Here, the Cell B wake-up strategy is illustrated as follows: the proportion of users receiving a user energy-efficiency signal meets a certain threshold.

Example 6

As shown in Fig. 6, a state transition is performed between state 1 and state 2 in the serving cell, i.e., Cell A, such as switching from a sleep/inactive/energy-efficiency state to a normal state/activated/service state. The specific process is as follows.

The Cell A provides at least one of the following configuration information to "UE or UE group or all UEs" through a first signaling.

A related parameter for generating the energy-efficiency signal.

The energy-efficiency signal may be a sequence or channel or an MAC signaling. The related parameter for generating the energy-efficiency signal is a parameter necessary for generating the energy-efficiency signal, which may be associated with a UE ID, an energy-efficiency function, or an energy-efficiency state.

Relevant information about the transmission occasion of the energy-efficiency signal, wherein

the relevant information about the transmission occasion of the energy-efficiency signal, i.e., relevant information about the time domain resource, frequency domain resource, and spatial domain resource where the transmission occasion of the energy-efficiency signal is located, is used by the terminal to determine the transmission occasion of the energy-efficiency signal.

Conditional information for sending the energy-efficiency signal, such as a measurement threshold, arrival of a specific service, configuration timers, channel status information, or a synchronization requirement, etc.

The Cell A is a serving cell, a Primary Cell (PCell), or a Primary Serving Cell (primary serving cell) of the UE.

The Cell A sends a specific reference signal and/or channel signal in the energy-efficiency state, such as a sparse SSB. The specific reference signal and/or channel signal may be based on a parameter configuration unique to the Cell A, or the reference signal and/or channel signal determined under a certain configuration defined by a protocol.

The UE receives the first signaling sent by the Cell A, determines the transmission occasion of the energy-efficiency signal based on the first signaling and/or the protocol agreement, and generates the corresponding energy-efficiency signal.

The UE performs measurements on the specific reference signal and/or channel signal in the energy-efficiency state of the Cell A, such as the sparse SSB, the specific reference signal for network energy efficiency, etc. The measurements may include a Radio Resource Management (RRM) measurement or a discovery measurement or a channel quality measurement or a location information or channel state information or synchronization and desynchronization measurement.

The UE determines whether to send the energy-efficiency signal based on the conditional information for sending the energy-efficiency signal provided by the Cell A. For example, when the measurement result meets a conditional information requirement for sending the energy-efficiency signal, the UE sends the energy-efficiency signal to the Cell A to indicate or assist in indicating the Cell A to wake up or resume service or perform the state transition, for example, switching from sending the sparse SSB to a regular SSB. Alternatively, when the UE has a specific service that is arriving, such as a service with a strict latency requirement, a Ultra-Reliable and Low Latency Communications (URLLC) or Extended Reality (XR) service, or when the UE detects an uplink desynchronization, or when the UE detects a beam failure.

The UE sends the energy-efficiency signal to the Cell A at the transmission occasion of the energy-efficiency signal, which is used to indicate or assist in indicating the wake-up or energy-efficiency state transition of the Cell A.

Example 7

In a Carrier Aggregation (CA) scenario, a Cell A is a PCell (primary cell) and a Cell B is a SCell (secondary cell). When there is no UE connected to the SCell, the SCell may enter an energy-efficiency state. The energy-efficiency state may be an off state, a sleep state, or a semi-working state (i.e., maintaining limited terminal activities).

For example, the serving cell in the energy-efficiency state may exhibit the following behaviors:

    not sending an SSB;
    sending a sparse SSB;
    sending a specific reference signal in the energy-efficiency state, such as a TRS;
    the UE remaining connected to the PCell, and the UE sending an energy-efficiency signal to assist the PCell in triggering the serving cell to enter a normal state or an activated state. It may further assist or trigger the PCell to send the energy-efficiency signal to the serving cell as an on-demand signaling to trigger the serving cell to send a reference signal that can be used for synchronization. Here, the reference signal used for synchronization may be an SSB of a default period, an SSB of a specific period, or a reference signal that may be used for synchronization.

When the PCell and the serving cell are two intra-band cells, the terminal can achieve coarse synchronization at the PCell. When a certain condition is met, the UE can send the energy-efficiency signal to the PCell to assist or trigger the serving cell to send the reference signal that can be used for serving cell synchronization, such as sending an SSB with a smaller period, or sending a Tracking Reference Signal (TRS).

When the PCell and the serving cell are two inter-band cells, the PCell cannot assist the UE in achieving coarse synchronization. When a certain condition is met, the UE can send the energy-efficiency signal to the PCell to assist or trigger the serving cell to send the reference signal that can be used for serving cell synchronization, such as an SSB under regular configuration.

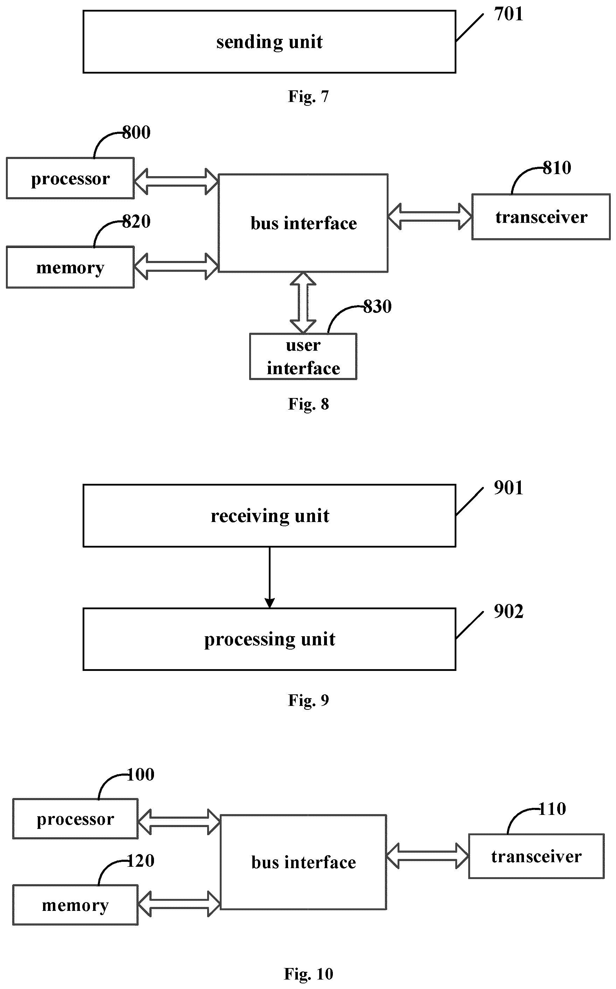

As shown in Fig. 7, the embodiments of the present disclosure further provide an apparatus for sending an energy-efficiency signal, including:

a sending unit 701, configured to send the energy-efficiency signal to a network side device, wherein the energy-efficiency signal is used to assist or trigger a cell in an energy-efficiency state to perform a state-transition related operation, wherein the energy-efficiency signal is generated by a terminal,

wherein the cell in the energy-efficiency state includes: at least one serving cell of the terminal, and/or at least one neighbor cell of the serving cell.

As an optional embodiment, in the case that the network side device is the serving cell of the terminal, the cell in the energy-efficiency state is: the serving cell, and/or the neighbor cell of the serving cell; or

in the case that the network side device is the neighbor cell of the serving cell, the cell in the energy-efficiency state is the neighbor cell.

As an optional embodiment, in the case that the network side device is a primary serving cell or a secondary serving cell of the terminal, the cell in the energy-efficiency state is at least one of: the secondary serving cell, a neighbor cell of the primary serving cell, or a neighbor cell of the secondary serving cell.

As an optional embodiment, the state-transition related operation includes at least one of the followings:

switching from the energy-efficiency state to a non-energy-efficiency state; or
sending a specific reference signal or channel.

As an optional embodiment, the sending unit 701 includes:
a sending subunit, configured to send the energy-efficiency signal to the network side device in the case that a first condition is met.

As an optional embodiment, the first condition includes at least one of the followings:

a specific measurement threshold condition;
a specific service condition;
a location information condition;
a timer condition for sending the energy-efficiency signal;
a channel state information condition; or
a synchronization condition.

As an optional embodiment, the first condition includes the second condition and/or a third condition, wherein the second condition is determined by a signaling configuration, and the third condition is determined by the pre-agreement; wherein a signaling for configuring the second condition includes at least one of a broadcast signaling, a common signaling, or a terminal-specific signaling.

As an optional embodiment, the energy-efficiency signal carries first information, and the first information includes at least one of the followings:

relevant information about the cell in the energy-efficiency state;
first indication information for indicating the cell in the energy-efficiency state to perform a state transition; or
second indication information for indicating the cell in the energy-efficiency state to send a specific signal or channel.

As an optional embodiment, the energy-efficiency signal is a target sequence, or an uplink control channel, or a Medium Access Control (MAC) signaling, or user assistance information.

As an optional embodiment, a sequence-related parameter of the target sequence is associated with the first information.

As an optional embodiment, the target sequence is at least one of an M sequence, a Gold sequence, a Zadoff-Chu (ZC) sequence, and a fixed sequence;

a sequence-related parameter of the target sequence includes at least one of the followings:

an initial value of the M sequence;
an initial parameter of the Gold sequence;
a cyclic shift or a logical root sequence of the ZC sequence; or
a scrambling code for sequence scrambling of the fixed sequence.

As an optional embodiment, the uplink control channel or the MAC signaling or the user assistance information includes a preset bit field, and the preset bit field is used to carry the first information.

As an optional embodiment, the apparatus is further configured to:

determine second information based on a signaling configuration and/or a pre-agreement of the serving cell; wherein the second information includes at least one of the followings:

relevant information for determining a transmission occasion of the energy-efficiency signal;
relevant information about the cell in the energy-efficiency state;
relevant information about signal sending by the cell in the energy-efficiency state; or
relevant information for generating the energy-efficiency signal.

As an optional embodiment, the relevant information about the cell in the energy-efficiency state includes at least one of the followings:

identifier information of a cell in an energy-efficiency state; for example;
an association between the cell in the energy-efficiency state and the energy-efficiency signal;
an association between the cell in the energy-efficiency state and a transmission occasion of the energy-efficiency signal; or
configuration information of a reference signal or channel sent by the cell in the energy-efficiency state.

As an optional embodiment, it includes at least one of the followings:

the relevant information for generating the energy-efficiency signal is associated with the relevant information for determining the transmission occasion of the energy-efficiency signal; or
the relevant information for generating the energy-efficiency signal is associated with the relevant information about the cell in the energy-efficiency state; or
the relevant information for generating the energy-efficiency signal is associated with the relevant information for determining the transmission occasion of the energy-efficiency signal and the relevant information about the cell in the energy-efficiency state; or
the relevant information for generating the energy-efficiency signal is associated with first indication information; or
the relevant information for generating the energy-efficiency signal is associated with second indication information.

In the embodiments of the present disclosure, the terminal sends an energy-efficiency signal to the network side device, and the cell in the energy-efficiency state performs the state-transition related operation based on the energy-efficiency signal to achieve dynamic network energy efficiency, thereby dynamically providing services to the terminal.

It should be noted here that the above-mentioned apparatus provided by the embodiments of the present disclosure can implement all the method steps implemented by the above-mentioned method embodiments, and can achieve the same technical effect. The parts and beneficial effects of the embodiments that are the same as the method embodiments will no longer be described in detail.

As shown in Fig. 8, the embodiments of the present disclosure further provide a terminal, including a memory 820, a transceiver 810, and a processor 800:

the memory 820 is configured to store a computer program; the transceiver 810 is configured to send and receive data under the control of the processor 800; the processor 800 is configured to read the computer program in the memory 820 and perform the following operations:

sending the energy-efficiency signal to a network side device, wherein the energy-efficiency signal is used to assist or trigger a cell in an energy-efficiency state to perform a state-transition related operation;
wherein the cell in the energy-efficiency state includes: at least one serving cell of the terminal, and/or, at least one neighbor cell of the serving cell.

As an optional embodiment, in the case that the network side device is the serving cell of the terminal, the cell in the energy-efficiency state is the serving cell and/or the neighbor cell of the serving cell; or
in the case that the network side device is the neighbor cell of the serving cell, the cell in the energy-efficiency state is the neighbor cell of the serving cell.

As an optional embodiment, in the case that the network side device is a primary serving cell or a secondary serving cell of the terminal, the cell in the energy-efficiency state is at least one of: the secondary serving cell, a neighbor cell of the primary serving cell, or a neighbor cell of the secondary serving cell.

As an optional embodiment, the state-transition related operation includes at least one of the followings:

switching from the energy-efficiency state to a non-energy-efficiency state; or
sending a specific reference signal or channel.

As an optional embodiment, the processor 800 is further configured to read the computer program in the memory 820 and perform the following operations:
a sending subunit, configured to send the energy-efficiency signal to the network side device in the case that a first condition is met.

As an optional embodiment, the first condition includes at least one of the followings:

  a specific measurement threshold condition;
  a specific service condition;
  a location information condition;
  a timer condition for sending the energy-efficiency signal;
  a channel state information condition; or
  a synchronization condition.

As an optional embodiment, the first condition includes the second condition and/or a third condition, wherein the second condition is determined by a signaling configuration, and the third condition is determined by the pre-agreement; wherein a signaling for configuring the second condition includes at least one of a broadcast signaling, a common signaling, or a terminal-specific signaling.

As an optional embodiment, the energy-efficiency signal carries first information, and the first information includes at least one of the followings:

  relevant information about the cell in the energy-efficiency state;
  first indication information for indicating the cell in the energy-efficiency state to perform a state transition; or
  second indication information for indicating the cell in the energy-efficiency state to send a specific signal or channel.

As an optional embodiment, the energy-efficiency signal is a target sequence, or an uplink control channel, or a Medium Access Control (MAC) signaling, or user assistance information.

As an optional embodiment, a sequence-related parameter of the target sequence is associated with the first information.

As an optional embodiment, the target sequence is at least one of an M sequence, a Gold sequence, a Zadoff-Chu (ZC) sequence, and a fixed sequence;
a sequence-related parameter of the target sequence includes at least one of the followings:

  an initial value of the M sequence;
  an initial parameter of the Gold sequence;
  a cyclic shift or a logical root sequence of the ZC sequence; or
  a scrambling code for sequence scrambling of the fixed sequence.

As an optional embodiment, the uplink control channel or the MAC signaling or the user assistance information includes a preset bit field, and the preset bit field is used to carry the first information.

As an optional embodiment, the processor 800 is further configured to read the computer program in the memory 820 and perform the following operations:
determining second information based on a signaling configuration and/or a pre-agreement of the serving cell; wherein the second information includes at least one of the followings:

  relevant information for determining a transmission occasion of the energy-efficiency signal;
  relevant information about the cell in the energy-efficiency state;
  relevant information about signal sending by the cell in the energy-efficiency state; or
  relevant information for generating the energy-efficiency signal.

As an optional embodiment, the relevant information about the cell in the energy-efficiency state includes at least one of the followings:

  identifier information of the cell in the energy-efficiency state;
  an association between the cell in the energy-efficiency state and the energy-efficiency signal;
  an association between the cell in the energy-efficiency state and a transmission occasion of the energy-efficiency signal; or

configuration information of a reference signal or channel sent by the cell in the energy-efficiency state.

As an optional embodiment, it includes at least one of the followings:

the relevant information for generating the energy-efficiency signal is associated with the relevant information for determining the transmission occasion of the energy-efficiency signal; or

the relevant information for generating the energy-efficiency signal is associated with the relevant information about the cell in the energy-efficiency state; or

the relevant information for generating the energy-efficiency signal is associated with the relevant information for determining the transmission occasion of the energy-efficiency signal and the relevant information about the cell in the energy-efficiency state; or

the relevant information for generating the energy-efficiency signal is associated with first indication information; or

the relevant information for generating the energy-efficiency signal is associated with second indication information.

In Fig. 8, the bus architecture may include any number of interconnected buses and bridges, and connects various circuits including one or more processors represented by the processor 800 and the memory represented by the memory 820. The bus architecture can also link together various other circuits such as peripherals, voltage regulators, and power management circuits, which are all well known in the art and therefore will not be described further herein. The bus interface provides the interface. The transceiver 810 may be a plurality of elements, including a transmitter and a receiver, to allow for communication with various other apparatuses on the transmission medium. The transmission medium includes wireless channels, wired channels, optical cables, and other transmission media. For different user equipments, the user interface 830 can also be an interface capable of externally or internally connecting a required device. The connected device includes but is not limited to a keypad, a display, a speaker, a microphone, a joystick, etc.

The processor 800 is responsible for managing the bus architecture and general processing, and the memory 820 can store data used by the processor 800 when performing operations.

Optionally, the processor 803 may be a Central Processing Unit (CPU), an Application Specific Integrated Circuit (ASIC), a Field Programmable Gate Array (FPGA) or Complex Programmable Logic Device (CPLD). The processor can also adopt a multi-core architecture.

By calling the computer program stored in the memory, the processor is configured to perform any of the methods provided by the embodiments of the present application according to the obtained executable instructions. The processor and the memory can also be physically separated.

In the embodiments of the present disclosure, the terminal sends an energy-efficiency signal to the network side device, and the cell in the energy-efficiency state performs the state-transition related operation based on the energy-efficiency signal to achieve dynamic network energy efficiency, thereby dynamically providing services to the terminal.

It should be noted here that the above-mentioned terminal provided by the embodiments of the present disclosure can implement all the method steps implemented by the above-mentioned method embodiments, and can achieve the same technical effect. The parts and beneficial effects of the embodiments that are the same as the method embodiments will no longer be described in detail.

As shown in Fig. 9, the embodiment of the present disclosure further provides a state transition apparatus, including:

a receiving unit 901, configured to receive an energy-efficiency signal sent by a terminal;

a processing unit 902, configured to assist or trigger, based on the energy-efficiency signal, a cell in an energy-efficiency state to perform a state-transition related operation;

wherein the cell in the energy-efficiency state includes: at least one serving cell of the terminal, and/or at least one neighbor cell of the serving cell.

As an optional embodiment, in the case that the network side device is the serving cell of the terminal, the cell in the energy-efficiency state is the serving cell and/or the neighbor cell of the serving cell; or

in the case that the network side device is the neighbor cell of the serving cell, the cell in the energy-efficiency state is the neighbor cell of the serving cell.

As an optional embodiment, in the case that the network side device is a primary serving cell or a secondary serving cell of the terminal, the cell in the energy-efficiency state is at least one of: the secondary serving cell, a neighbor cell of the primary serving cell, or a neighbor cell of the secondary serving cell.

As an optional embodiment, the state-transition related operation includes at least one of the followings:

switching from the energy-efficiency state to a non-energy-efficiency state; or

sending a specific reference signal or channel.

As an optional embodiment, the apparatus further includes:
a first configuration unit, configured to configure a second condition for the terminal through a signaling; wherein the second condition is a triggering condition of the energy-efficiency signal, and a signaling for configuring the second condition includes at least one of a broadcast signaling, a common signaling, or a terminal-specific signaling.

As an optional embodiment, the second condition includes at least one of the followings:

a specific measurement threshold condition;
a specific service condition;
a location information condition;
a timer condition for sending the energy-efficiency signal;
a channel state information condition; or
a synchronization condition.

As an optional embodiment, the energy-efficiency signal carries first information, and the first information includes at least one of the followings:

relevant information about the cell in the energy-efficiency state;
first indication information for indicating the cell in the energy-efficiency state to perform a state transition; or
second indication information for indicating the cell in the energy-efficiency state to send a specific signal or channel.

As an optional embodiment, the energy-efficiency signal is a target sequence, or an uplink control channel, or a Medium Access Control (MAC) signaling, or user assistance information.

As an optional embodiment, a sequence-related parameter of the target sequence is associated with the first information.

As an optional embodiment, the target sequence is at least one of an M sequence, a Gold sequence, a Zadoff-Chu (ZC) sequence, and a fixed sequence; a sequence-related parameter of the target sequence includes at least one of the followings:

an initial value of the M sequence;
an initial parameter of the Gold sequence;
a cyclic shift or a logical root sequence of the ZC sequence; or
a scrambling code for sequence scrambling of the fixed sequence.

As an optional embodiment, the uplink control channel or the MAC signaling or the user assistance information includes a preset bit field, and the preset bit field is used to carry the first information.

As an optional embodiment, the apparatus further includes:
a second configuration unit, configured to configure second information for the terminal through a signaling; wherein the second information includes at least one of the followings:

relevant information for determining a transmission occasion of the energy-efficiency signal;
relevant information about the cell in the energy-efficiency state;
relevant information about signal sending by the cell in the energy-efficiency state; or
relevant information for generating the energy-efficiency signal.

As an optional embodiment, the relevant information about the cell in the energy-efficiency state includes at least one of the followings:

identifier information of the cell in the energy-efficiency state;
an association between the cell in the energy-efficiency state and the energy-efficiency signal;
an association between the cell in the energy-efficiency state and a transmission occasion of the energy-efficiency signal; or
configuration information of a reference signal or channel sent by the cell in the energy-efficiency state.

As an optional embodiment, it includes at least one of the followings:

the relevant information for generating the energy-efficiency signal is associated with the relevant information for determining the transmission occasion of the energy-efficiency signal; or

the relevant information for generating the energy-efficiency signal is associated with the relevant information about the cell in the energy-efficiency state; or

the relevant information for generating the energy-efficiency signal is associated with the relevant information for determining the transmission occasion of the energy-efficiency signal and the relevant information about the cell in the energy-efficiency state; or

the relevant information for generating the energy-efficiency signal is associated with first indication information; or

the relevant information for generating the energy-efficiency signal is associated with second indication information.

In the embodiments of the present disclosure, the terminal sends an energy-efficiency signal to the network side device, and the cell in the energy-efficiency state performs the state-transition related operation based on the energy-efficiency signal to achieve dynamic network energy efficiency, thereby dynamically providing services to the terminal.

It should be noted here that the above-mentioned apparatus provided by the embodiments of the present disclosure can implement all the method steps implemented by the above-mentioned method embodiments, and can achieve the same technical effect. The parts and beneficial effects of the embodiments that are the same as the method embodiments will no longer be described in detail.

As shown in Fig. 10, the embodiment of the present disclosure further provides a network side device, including a memory 120, a transceiver 110, and a processor 100;

the memory 120 is configured to store a computer program; the transceiver 110 is configured to send and receive data under the control of the processor 100; the processor 100 is configured to read the computer program in the memory 120 and perform the following operations:

receiving an energy-efficiency signal sent by a terminal;

assisting or triggering, based on the energy-efficiency signal, a cell in an energy-efficiency state to perform a state-transition related operation;

wherein the cell in the energy-efficiency state includes: at least one serving cell of the terminal, and/or at least one neighbor cell of the serving cell.

As an optional embodiment, in the case that the network side device is the serving cell of the terminal, the cell in the energy-efficiency state is the serving cell and/or the neighbor cell of the serving cell; or

in the case that the network side device is the neighbor cell of the serving cell, the cell in the energy-efficiency state is the neighbor cell of the serving cell.

As an optional embodiment, in the case that the network side device is a primary serving cell or a secondary serving cell of the terminal, the cell in the energy-efficiency state is at least one of: the secondary serving cell, a neighbor cell of the primary serving cell, or a neighbor cell of the secondary serving cell.

As an optional embodiment, the state-transition related operation includes at least one of the followings:

switching from the energy-efficiency state to a non-energy-efficiency state; or

sending a specific reference signal or channel.

As an optional embodiment, the processor 100 is further configured to read the computer program in the memory 120 and perform the following operations:

configuring a second condition for the terminal through a signaling; wherein the second condition is a triggering condition of the energy-efficiency signal, and a signaling for configuring the second condition includes at least one of a broadcast signaling, a common signaling, or a terminal-specific signaling.

As an optional embodiment, the second condition includes at least one of the followings:

a specific measurement threshold condition;

a specific service condition;

a location information condition;

a timer condition for sending the energy-efficiency signal;

a channel state information condition; or

a synchronization condition.

As an optional embodiment, the energy-efficiency signal carries first information, and the first information includes at least one of the followings:

relevant information about the cell in the energy-efficiency state;

first indication information for indicating the cell in the energy-efficiency state to perform a state transition; or
second indication information for indicating the cell in the energy-efficiency state to send a specific signal or channel.

As an optional embodiment, the energy-efficiency signal is a target sequence, or an uplink control channel, or a Medium Access Control (MAC) signaling, or user assistance information.

As an optional embodiment, a sequence-related parameter of the target sequence is associated with the first information.

As an optional embodiment, wherein the target sequence is at least one of an M sequence, a Gold sequence, a Zadoff-Chu (ZC) sequence, and a fixed sequence; a sequence-related parameter of the target sequence includes at least one of the followings:

an initial value of the M sequence;
an initial parameter of the Gold sequence;
a cyclic shift or a logical root sequence of the ZC sequence; or
a scrambling code for sequence scrambling of the fixed sequence.

As an optional embodiment, the uplink control channel or the MAC signaling or the user assistance information includes a preset bit field, and the preset bit field is used to carry first information.

As an optional embodiment, the processor 100 is further configured to read the computer program in the memory 120 and perform the following operations:

configuring part or all of the second information for the terminal through a signaling; wherein the second information includes at least one of the followings:

relevant information for determining a transmission occasion of the energy-efficiency signal;
relevant information about the cell in the energy-efficiency state;
relevant information about signal sending by the cell in the energy-efficiency state; or
relevant information for generating the energy-efficiency signal.

As an optional embodiment, the relevant information of the cell in the energy-efficiency state includes at least one of the followings:

identifier information of the cell in the energy-efficiency state;
an association between the cell in the energy-efficiency state and the energy-efficiency signal;
an association between the cell in the energy-efficiency state and a transmission occasion of the energy-efficiency signal; or
configuration information of a reference signal or channel sent by the cell in the energy-efficiency state.

As an optional embodiment, it includes at least one of the followings:

the relevant information for generating the energy-efficiency signal is associated with the relevant information for determining the transmission occasion of the energy-efficiency signal; or
the relevant information for generating the energy-efficiency signal is associated with the relevant information about the cell in the energy-efficiency state; or
the relevant information for generating the energy-efficiency signal is associated with the relevant information for determining the transmission occasion of the energy-efficiency signal and the relevant information about the cell in the energy-efficiency state; or
the relevant information for generating the energy-efficiency signal is associated with first indication information; or
the relevant information for generating the energy-efficiency signal is associated with second indication information.

In FIG. 10, the bus architecture may include any number of interconnected buses and bridges, and connects various circuits including one or more processors represented by the processor 100 and the memory represented by the memory 120. The bus architecture can also link together various other circuits such as peripherals, voltage regulators, and power management circuits, which are all well known in the art and therefore will not be described further herein. The bus interface provides the interface. The transceiver 110 may be a plurality of elements, including a transmitter and a receiver, to allow for communication with various other apparatuses on the transmission medium. The transmission medium includes wireless channels, wired channels, optical cables, and other transmission media. The processor 100 is responsible for managing the bus architecture and general processing, and the memory 120 can store data used by the processor 100 when performing operations.

The processor 100 may be a Central Processing Unit (CPU), an Application Specific Integrated Circuit (ASIC), a Field Programmable Gate Array (FPGA) or Complex Programmable Logic Device (CPLD). The processor can also adopt a multi-core architecture.

In the embodiments of the present disclosure, the terminal sends an energy-efficiency signal to the network side device, and the cell in the energy-efficiency state performs the state-transition related operation based on the energy-efficiency signal to achieve dynamic network energy efficiency, thereby dynamically providing services to the terminal.

It should be noted here that the above-mentioned network side device provided by the embodiments of the present disclosure can implement all the method steps implemented by the above-mentioned method embodiments, and can achieve the same technical effect. The parts and beneficial effects of the embodiments that are the same as the method embodiments will no longer be described in detail.

It should be noted that the division of units in the embodiments of the present application is schematic and is only a logical function division. In actual implementation, there may be other division methods. In addition, each functional unit in various embodiments of the present application may be integrated into one processing unit, or each unit may exist physically alone, or two or more units may be integrated into one unit. The above integrated units can be implemented in the form of hardware or software functional units.

If the integrated unit is implemented in the form of a software functional unit and sold or used as an independent product, it may be stored in a processor-readable storage medium. Based on such an understanding, essential parts, or parts contributing to the related art, of the technical solution of the present application may be implemented in a form of a software product. The computer software product is stored in a storage medium, and includes instructions to cause a computer device (which can be a personal computer, a server, or a network device, etc.) or a processor to execute all or part of the steps of the methods described in various embodiments of the present application. The aforementioned storage media include: USB flash disk, removable hard disk, Read-Only Memory (ROM), Random Access Memory (RAM), magnetic disk or optical disc and other media that can store program code.

The embodiments of the present disclosure further provide a processor-readable storage medium storing a computer program, wherein the computer program is used to cause the processor to execute the steps of the method embodiments as described above. The processor-readable storage medium may be any available media or data storage device that the processor can access, including but not limited to magnetic storage (such as floppy disks, hard disks, magnetic tapes, Magneto-Optical disks (MO)), optical storage (such as Compact Disc (CD), Digital Versatile Disc (DVD), Blu-ray Disc (BD), High-definition Versatile Disc (HVD)), and semiconductor memories (such as Read-Only Memory (ROM), Erasable Programmable ROM (EPROM), Electrically Erasable Programmable ROM (EEPROM), non-volatile memory (NAND FLASH), Solid State Disk or Solid State Drive (SSD)), etc.

Those skilled in the art will appreciate that embodiments of the present application may be provided as methods, systems, or computer program products. Accordingly, the present application may take the form of an entirely hardware embodiment, an entirely software embodiment, or an embodiment that combines software and hardware aspects. Furthermore, the present application may take the form of a computer program product embodied on one or more computer-usable storage media (including, but not limited to, magnetic disk storage, optical storage, and the like) including computer-usable program codes.

The present application has been described with reference to flow diagrams and/or block diagrams of methods, devices (systems), and computer program products according to embodiments of the present application. It will be understood that each flow and/or block of the flow diagrams and/or block diagrams, and combinations of flows and/or blocks in the flow diagrams and/or block diagrams, can be implemented by computer executable instructions. These computer executable instructions may be provided to a processor of a general purpose computer, special purpose computer, embedded processor, or other programmable data processing device to produce a machine, such that the instructions, which are executed via the processor of the computer or other programmable data processing device, create means for implementing the functions specified in the flow diagram flow or flows and/or block diagram block or blocks.

These processor executable instructions may also be stored in a processor-readable storage that can direct a computer or other programmable data processing device to function in a particular manner, such that the instructions stored in the processor-readable storage produce an article of manufacture including instruction means which implement the function specified in the flow diagram flow or flows and/or block diagram block or blocks.

The processor executable instructions may also be loaded onto a computer or other programmable data processing device to cause a series of operational steps to be performed on the computer or other programmable device to produce a computer-implemented process, such that the instructions which are executed on the computer or other programmable device provide steps for implementing the functions specified in the flow diagram flow or flows and/or block diagram block or blocks.

It should be noted that, those skilled in the art can make various changes and modifications to the present application without departing from the spirit and scope of the application. In this way, if these changes and modifications of the present application fall within the scope of the claims of the present application and equivalent thereof, the present application is also intended to include these changes and modifications.

**Claims**

1. A method for sending an energy-efficiency signal, performed by a terminal, the method comprising:

   sending the energy-efficiency signal to a network side device, wherein the energy-efficiency signal is used to assist or trigger a cell in an energy-efficiency state to perform a state-transition related operation, wherein the energy-efficiency signal is generated by the terminal;
   wherein the cell in the energy-efficiency state comprises: at least one servicing cell of the terminal, and/or, at least one neighbor cell of the serving cell.

2. The method according to claim 1, wherein in the case that the network side device is the serving cell of the terminal, the cell in the energy-efficiency state is the serving cell and/or the neighbor cell of the serving cell; or
   in the case that the network side device is the neighbor cell of the serving cell, the cell in the energy-efficiency state is the neighbor cell.

3. The method according to claim 1, wherein in the case that the network side device is a primary serving cell or a secondary serving cell of the terminal, the cell in the energy-efficiency state is at least one of: the secondary serving cell, a neighbor cell of the primary serving cell, or a neighbor cell of the secondary serving cell.

4. The method according to claim 1, wherein the state-transition related operation comprises at least one of the followings:

   switching from the energy-efficiency state to a non-energy-efficiency state; or
   sending a specific reference signal or channel.

5. The method according to claim 1, wherein the sending the energy-efficiency signal to the network side device comprises:
   sending the energy-efficiency signal to the network side device in the case that a first condition is met.

6. The method according to claim 5, wherein the first condition comprises at least one of the followings:

   a specific measurement threshold condition;
   a specific service condition;
   a location information condition;
   a timer condition for sending the energy-efficiency signal;
   a channel state information condition; or
   a synchronization condition.

7. The method according to claim 5 or 6, wherein the first condition comprises a second condition and/or a third condition, wherein the second condition is determined by a signaling configuration, and the third condition is pre-defined;
   wherein a signaling for configuring the second condition comprises at least one of a broadcast signaling, a common signaling, or a terminal-specific signaling.

8. The method according to claim 1, wherein the energy-efficiency signal carries first information, and the first information comprises at least one of the followings:

   relevant information about the cell in the energy-efficiency state;
   first indication information for indicating the cell in the energy-efficiency state to perform a state transition; or
   second indication information for indicating the cell in the energy-efficiency state to send a specific signal or channel.

9. The method according to claim 1, wherein the energy-efficiency signal is a target sequence, or an uplink control channel, or a Medium Access Control (MAC) signaling, or user assistance information.

10. The method according to claim 9, wherein a sequence-related parameter of the target sequence is associated with the first information.

11. The method according to claim 9 or 10, wherein the target sequence is at least one of an M sequence, a Gold sequence, a Zadoff-Chu (ZC) sequence, and a fixed sequence;
a sequence-related parameter of the target sequence comprises at least one of the followings:

an initial value of the M sequence;
an initial parameter of the Gold sequence;
a cyclic shift or a logical root sequence of the ZC sequence; or
a scrambling code for sequence scrambling of the fixed sequence.

12. The method according to claim 9, wherein the uplink control channel or the MAC signaling or the user assistance information comprises a preset bit field, and the preset bit field is used to carry the first information.

13. The method according to any one of claims 1 to 12, wherein the method further comprises:
determining second information based on a signaling configuration and/or a pre-agreement of the serving cell;
wherein the second information comprises at least one of the followings:

relevant information for determining a transmission occasion of the energy-efficiency signal;
relevant information about the cell in the energy-efficiency state;
relevant information about signal sending by the cell in the energy-efficiency state; or
relevant information for generating the energy-efficiency signal.

14. The method according to claim 8 or 13, wherein the relevant information about the cell in the energy-efficiency state comprises at least one of the followings:

identifier information of the cell in the energy-efficiency state;
an association between the cell in the energy-efficiency state and the energy-efficiency signal;
an association between the cell in the energy-efficiency state and a transmission occasion of the energy-efficiency signal; or
configuration information of a reference signal or channel sent by the cell in the energy-efficiency state.

15. The method according to claim 13, comprising at least one of the followings:

the relevant information for generating the energy-efficiency signal is associated with the relevant information for determining the transmission occasion of the energy-efficiency signal; or
the relevant information for generating the energy-efficiency signal is associated with the relevant information about the cell in the energy-efficiency state; or
the relevant information for generating the energy-efficiency signal is associated with the relevant information for determining the transmission occasion of the energy-efficiency signal and the relevant information about the cell in the energy-efficiency state; or
the relevant information for generating the energy-efficiency signal is associated with first indication information; or
the relevant information for generating the energy-efficiency signal is associated with second indication information.

16. A state transition method, performed by a network side device, the method comprising:

receiving an energy-efficiency signal sent by a terminal;
assisting or triggering, based on the energy-efficiency signal, a cell in an energy-efficiency state to perform a state-transition related operation;
wherein the cell in the energy-efficiency state comprises: at least one serving cell of the terminal, and/or at least one neighbor cell of the serving cell.

17. The method according to claim 16, wherein in the case that the network side device is the serving cell of the terminal, the cell in the energy-efficiency state is the serving cell and/or the neighbor cell of the serving cell; or
in the case that the network side device is the neighbor cell of the serving cell, the cell in the energy-efficiency state is the neighbor cell.

18. The method according to claim 16, wherein in the case that the network side device is a primary serving cell or a secondary serving cell of the terminal, the cell in the energy-efficiency state is at least one of: the secondary serving cell, a neighbor cell of the primary serving cell, or a neighbor cell of the secondary serving cell.

19. The method according to claim 16, wherein the state-transition related operation comprises at least one of the followings:

    switching from the energy-efficiency state to a non-energy-efficiency state; or
    sending a specific reference signal or channel.

20. The method according to claim 16, wherein the method further comprises:
configuring a second condition for the terminal through a signaling, wherein the second condition is a triggering condition of the energy-efficiency signal, and a signaling for configuring the second condition comprises at least one of a broadcast signaling, a common signaling, or a terminal-specific signaling.

21. The method according to claim 20, wherein the second condition comprises at least one of the followings:

    a specific measurement threshold condition;
    a specific service condition;
    a location information condition;
    a timer condition for sending the energy-efficiency signal;
    a channel state information condition; or
    a synchronization condition.

22. The method according to claim 16, wherein the energy-efficiency signal carries first information, and the first information comprises at least one of the followings:

    relevant information about the cell in the energy-efficiency state;
    first indication information for indicating the cell in the energy-efficiency state to perform a state transition; or
    second indication information for indicating the cell in the energy-efficiency state to send a specific signal or channel.

23. The method according to claim 16, wherein the energy-efficiency signal is a target sequence, or an uplink control channel, or a Medium Access Control (MAC) signaling, or user assistance information.

24. The method according to claim 23, wherein a sequence-related parameter of the target sequence is associated with the first information.

25. The method according to claim 23 or 24, wherein the target sequence is at least one of an M sequence, a Gold sequence, a Zadoff-Chu (ZC) sequence, and a fixed sequence;
a sequence-related parameter of the target sequence comprises at least one of the followings:

    an initial value of the M sequence;
    an initial parameter of the Gold sequence;
    a cyclic shift or a logical root sequence of the ZC sequence; or
    a scrambling code for sequence scrambling of the fixed sequence.

26. The method according to claim 23, wherein the uplink control channel or the MAC signaling or the user assistance information comprises a preset bit field, and the preset bit field is used to carry first information.

27. The method according to any one of claims 16 to 26, wherein the method further comprises:
configuring a second information for the terminal through a signaling; wherein the second information comprises at least one of the followings:

    relevant information for determining a transmission occasion of the energy-efficiency signal;
    relevant information about the cell in the energy-efficiency state;
    relevant information about signal sending by the cell in the energy-efficiency state; or
    relevant information for generating the energy-efficiency signal.

28. The method according to claim 22 or 27, wherein the relevant information about the cell in the energy-efficiency state comprises at least one of the followings:

identifier information of the cell in the energy-efficiency state;
an association between the cell in the energy-efficiency state and the energy-efficiency signal;
an association between the cell in the energy-efficiency state and a transmission occasion of the energy-efficiency signal; or
configuration information of a reference signal or channel sent by the cell in the energy-efficiency state.

29. The method according to claim 27, comprising at least one of the followings:

the relevant information for generating the energy-efficiency signal is associated with the relevant information for determining the transmission occasion of the energy-efficiency signal; or
the relevant information for generating the energy-efficiency signal is associated with the relevant information about the cell in the energy-efficiency state; or
the relevant information for generating the energy-efficiency signal is associated with the relevant information for determining the transmission occasion of the energy-efficiency signal and the relevant information about the cell in the energy-efficiency state; or
the relevant information for generating the energy-efficiency signal is associated with first indication information; or
the relevant information for generating the energy-efficiency signal is associated with second indication information.

30. An apparatus for sending an energy-efficiency signal, comprising:

a sending unit, configured to send the energy-efficiency signal to a network side device, wherein the energy-efficiency signal is used to assist or trigger a cell in an energy-efficiency state to perform a state-transition related operation, wherein the energy-efficiency signal is generated by a terminal;
wherein the cell in the energy-efficiency state comprises: at least one serving cell of the terminal, and/or at least one neighbor cell of the serving cell.

31. The apparatus according to claim 30, wherein in the case that the network side device is the serving cell of the terminal, the cell in the energy-efficiency state is: the serving cell, and/or the neighbor cell of the serving cell; or
in the case that the network side device is the neighbor cell of the serving cell, the cell in the energy-efficiency state is the neighbor cell.

32. The apparatus according to claim 30, wherein in the case that the network side device is a primary serving cell or a secondary serving cell of the terminal, the cell in the energy-efficiency state is at least one of: the secondary serving cell, a neighbor cell of the primary serving cell, or a neighbor cell of the secondary serving cell.

33. The apparatus according to claim 30, wherein the state-transition related operation comprises at least one of the followings:

switching from the energy-efficiency state to a non-energy-efficiency state; or
sending a specific reference signal or channel.

34. The apparatus according to claim 30, wherein the sending unit is further configured to:

send the energy-efficiency signal to the network side device in the case that a first condition is met;
the first condition comprises at least one of the followings:

a specific measurement threshold condition;
a specific service condition;
a location information condition;
a timer condition for sending the energy-efficiency signal;
a channel state information condition; or
a synchronization condition.

35. The apparatus according to claim 30, wherein the energy-efficiency signal carries first information, and the first information comprises at least one of the followings:

relevant information about the cell in the energy-efficiency state;
first indication information for indicating the cell in the energy-efficiency state to perform a state transition; or
second indication information for indicating the cell in the energy-efficiency state to send a specific signal or channel.

36. The apparatus according to any one of claims 30 to 35, wherein the apparatus is further configured to: determine second information based on a signaling configuration and/or a pre-agreement of the serving cell; wherein the second information comprises at least one of the followings:

relevant information for determining a transmission occasion of the energy-efficiency signal;
relevant information about the cell in the energy-efficiency state;
relevant information about signal sending by the cell in the energy-efficiency state; or
relevant information for generating the energy-efficiency signal.

37. A terminal, comprising a memory, a transceiver, and a processor; wherein the memory stores a program or instruction executable on the processor, and when the program or instruction is executed by the processor, the steps of the method for sending the energy-efficiency signal according to any one of claims 1 to 15 are implemented.

38. A state transition apparatus, comprising:

a receiving unit, configured to receive an energy-efficiency signal sent by a terminal;
a processing unit, configured to assist or trigger, based on the energy-efficiency signal, a cell in an energy-efficiency state to perform a state-transition related operation;
wherein the cell in the energy-efficiency state comprises: at least one serving cell of the terminal, and/or at least one neighbor cell of the serving cell.

39. The apparatus according to claim 38, wherein in the case that the network side device is the serving cell of the terminal, the cell in the energy-efficiency state is the serving cell and/or the neighbor cell of the serving cell; or
in the case that the network side device is the neighbor cell of the serving cell, the cell in the energy-efficiency state is the neighbor cell.

40. The apparatus according to claim 38, wherein in the case that the network side device is a primary serving cell or a secondary serving cell of the terminal, the cell in the energy-efficiency state is at least one of: the secondary serving cell, a neighbor cell of the primary serving cell, or a neighbor cell of the secondary serving cell.

41. The apparatus according to claim 38, wherein the state-transition related operation comprises at least one of the followings:

switching from the energy-efficiency state to a non-energy-efficiency state; or
sending a specific reference signal or channel.

42. The apparatus according to claim 38, wherein the apparatus further comprises:

a first configuration unit, configured to configure a second condition for the terminal through a signaling; wherein the second condition is a triggering condition of the energy-efficiency signal, and a signaling for configuring the second condition comprises at least one of a broadcast signaling, a common signaling, or a terminal-specific signaling;
the second condition comprises at least one of the followings:

a specific measurement threshold condition;
a specific service condition;
a location information condition;
a timer condition for sending the energy-efficiency signal;
a channel state information condition; or
a synchronization condition.

**43.** The apparatus according to claim 38, wherein the energy-efficiency signal carries first information, and the first information comprises at least one of the followings:

relevant information about the cell in the energy-efficiency state;
first indication information for indicating the cell in the energy-efficiency state to perform a state transition; or
second indication information for indicating the cell in the energy-efficiency state to send a specific signal or channel.

**44.** The apparatus according to any one of claims 38 to 43, wherein the apparatus is further comprises:
a second configuration unit, configured to configure second information for the terminal through a signaling; wherein the second information comprises at least one of the followings:

relevant information for determining a transmission occasion of the energy-efficiency signal;
relevant information about the cell in the energy-efficiency state;
relevant information about signal sending by the cell in the energy-efficiency state; or
relevant information for generating the energy-efficiency signal.

**45.** A network side device, comprising a memory, a transceiver, and a processor; wherein the memory stores a program or instruction executable on the processor, and when the program or instruction is executed by the processor, the steps of the state transition method according to any one of claims 16 to 29 are implemented.

**46.** A processor-readable storage medium storing a computer program, wherein the computer program is used to cause a processor to execute the method according to any one of claims 1 to 15, or execute the method according to any one of claims 16 to 29.

Fig. 1

sending the energy-efficiency signal to a network side
device, wherein the energy-efficiency signal is used to
assist or trigger a cell in an energy-efficiency state to
perform a state-transition related operation

201

Fig. 2

receiving an energy-efficiency signal sent by a
terminal

301

assisting or triggering, based on the energy-
efficiency signal, a cell in an energy-efficiency
state to perform a state-transition related
operation

302

Fig. 3

Fig. 4

Fig. 5

UE energy-efficiency signal

Fig. 6

Fig. 7

Fig. 8

Fig. 9

Fig. 10

## INTERNATIONAL SEARCH REPORT

| | International application No. |
|---|---|
| | **PCT/CN2023/112143** |

| | | |
|---|---|---|
| **A.** | **CLASSIFICATION OF SUBJECT MATTER** | |
| | H04W52/02(2009.01)i | |
| | According to International Patent Classification (IPC) or to both national classification and IPC | |

| | |
|---|---|
| **B.** | **FIELDS SEARCHED** |
| Minimum documentation searched (classification system followed by classification symbols) | |
| IPC:H04W | |
| Documentation searched other than minimum documentation to the extent that such documents are included in the fields searched | |
| Electronic data base consulted during the international search (name of data base and, where practicable, search terms used) | |
| CNABS, CNTXT, ENTXTC, DWPI, VEN, 3GPP: 节能, 节电, 关闭, 休眠, 睡眠, 挂起, 激活, 唤醒, 基站, 小区, 终端, energy saving, dormant, dormancy, sleep, suspend, shutdown, activate, wake up, nodeb, NB, base station, cell, terminal | |

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | CN 112272396 A (MITSUBISHI ELECTRIC CORPORATION) 26 January 2021 (2021-01-26) description, paragraphs [103]-[425], and figures 10 and 17 | 1-8, 13-22, 27-46 |
| Y | CN 112272396 A (MITSUBISHI ELECTRIC CORPORATION) 26 January 2021 (2021-01-26) description, paragraphs [103]-[425], and figures 10 and 17 | 9-12, 23-26 |
| X | CN 102421172 A (ALCATEL-LUCENT SHANGHAI BELL CO., LTD.) 18 April 2012 (2012-04-18) description, paragraphs [0050]-[0069] | 1-8, 13-22, 27-46 |
| Y | CN 102421172 A (ALCATEL-LUCENT SHANGHAI BELL CO., LTD.) 18 April 2012 (2012-04-18) description, paragraphs [0050]-[0069] | 9-12, 23-26 |
| X | CN 113225809 A (DATANG MOBILE COMMUNICATIONS EQUIPMENT CO., LTD.) 06 August 2021 (2021-08-06) description, paragraphs [161]-[202] | 1-8, 13-22, 27-46 |

| | |
|---|---|
| ✓ Further documents are listed in the continuation of Box C. | ✓ See patent family annex. |

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 November 2023** | **21 November 2023** |

| Name and mailing address of the ISA/CN | Authorized officer |
|---|---|
| **China National Intellectual Property Administration (ISA/ CN) China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/112143** |

### C. DOCUMENTS CONSIDERED TO BE RELEVANT

| Category* | Citation of document, with indication, where appropriate, of the relevant passages | Relevant to claim No. |
| --- | --- | --- |
| Y | CN 113225809 A (DATANG MOBILE COMMUNICATIONS EQUIPMENT CO., LTD.) 06 August 2021 (2021-08-06)<br>description, paragraphs [161]-[202] | 9-12, 23-26 |
| X | WO 2014056174 A1 (BROADCOM CORPORATION; HONG WEI; WANG HAIMING; HAN JING; SUN PENGFEI; BAI WEI; WEI NA; GAO CHUNYAN; ZENG ERLIN) 17 April 2014 (2014-04-17)<br>description, page 18, line 5 to page 26, line 5 | 1-8, 13-22, 27-46 |
| Y | WO 2014056174 A1 (BROADCOM CORPORATION; HONG WEI; WANG HAIMING; HAN JING; SUN PENGFEI; BAI WEI; WEI NA; GAO CHUNYAN; ZENG ERLIN) 17 April 2014 (2014-04-17)<br>description, page 18, line 5 to page 26, line 5 | 9-12, 23-26 |
| Y | CN 106465279 A (NTT DOCOMO, INC.) 22 February 2017 (2017-02-22)<br>description, paragraphs [65]-[74] | 9-12, 23-26 |
| Y | CN 102119559 A (NOKIA SIEMENS NETWORKS OY) 06 July 2011 (2011-07-06)<br>description, paragraphs [25]-[52] | 10-11, 24-25 |
| A | CN 107925942 A (TELEFONAKTIEBOLAGET LM ERICSSON (PUBL)) 17 April 2018 (2018-04-17)<br>entire document | 1-46 |
| A | LG ELECTRONICS. "R1-132236 "Analysis and design considerations of cell on/off in small cell""<br>*3GPP tsg_ran\WG1_RL1*, No. TSGR1_73, 11 May 2013 (2013-05-11),<br>entire document | 1-46 |
| A | NTT DOCOMO, INC. "R1-134496 "Views on Small Cell On/Off with Small Cell Discovery""<br>*3GPP tsg_ran\WG1_RL1*, No. TSGR1_74b, 28 September 2013 (2013-09-28),<br>entire document | 1-46 |

Form PCT/ISA/210 (second sheet) (July 2022)

## INTERNATIONAL SEARCH REPORT
### Information on patent family members

| International application No. |
| :-- |
| **PCT/CN2023/112143** |

| Patent document cited in search report | | | Publication date (day/month/year) | Patent family member(s) | | | Publication date (day/month/year) |
| :-- | :-- | :-- | :-- | :-- | :-- | :-- | :-- |
| CN | 112272396 | A | 26 January 2021 | US | 2020213941 | A1 | 02 July 2020 |
| | | | | US | 11064430 | B2 | 13 July 2021 |
| | | | | RU | 2016135225 | A | 05 March 2018 |
| | | | | RU | 2016135225 | A3 | 17 September 2018 |
| | | | | EP | 4250823 | A2 | 27 September 2023 |
| | | | | RU | 2019136250 | A | 12 May 2021 |
| | | | | MX | 2018012264 | A | 13 April 2022 |
| | | | | JP | 2019097217 | A | 20 June 2019 |
| | | | | MX | 2016010003 | A | 07 October 2016 |
| | | | | MX | 359694 | B | 08 October 2018 |
| | | | | US | 2016337964 | A1 | 17 November 2016 |
| | | | | US | 9860836 | B2 | 02 January 2018 |
| | | | | US | 2021289440 | A1 | 16 September 2021 |
| | | | | US | 2017318528 | A1 | 02 November 2017 |
| | | | | US | 10652818 | B2 | 12 May 2020 |
| | | | | JPWO | 2015114973 | A1 | 23 March 2017 |
| | | | | JP | 6506179 | B2 | 24 April 2019 |
| | | | | BR | 112016017549 | A2 | 08 August 2017 |
| | | | | RU | 2018130580 | A | 20 March 2019 |
| | | | | RU | 2018130580 | A3 | 30 May 2019 |
| | | | | RU | 2706738 | C1 | 20 November 2019 |
| | | | | JP | 2020202598 | A | 17 December 2020 |
| | | | | JP | 2022123141 | A | 23 August 2022 |
| | | | | MX | 2022004496 | A | 08 June 2022 |
| | | | | EP | 3849248 | A1 | 14 July 2021 |
| | | | | EP | 3101955 | A1 | 07 December 2016 |
| | | | | EP | 3101955 | A4 | 13 September 2017 |
| | | | | WO | 2015114973 | A1 | 06 August 2015 |
| CN | 102421172 | A | 18 April 2012 | KR | 20130069827 | A | 26 June 2013 |
| | | | | WO | 2012042375 | A2 | 05 April 2012 |
| | | | | WO | 2012042375 | A3 | 12 July 2012 |
| | | | | JP | 2013540392 | A | 31 October 2013 |
| | | | | JP | 5579328 | B2 | 27 August 2014 |
| | | | | EP | 2622936 | A2 | 07 August 2013 |
| | | | | US | 2013189932 | A1 | 25 July 2013 |
| CN | 113225809 | A | 06 August 2021 | None | | | |
| WO | 2014056174 | A1 | 17 April 2014 | None | | | |
| CN | 106465279 | A | 22 February 2017 | WO | 2015165894 | A1 | 05 November 2015 |
| | | | | US | 2017048918 | A1 | 16 February 2017 |
| | | | | EP | 2941063 | A1 | 04 November 2015 |
| | | | | EP | 2941063 | B1 | 01 November 2017 |
| | | | | JP | 2016523063 | A | 04 August 2016 |
| | | | | JP | 6106335 | B2 | 29 March 2017 |
| CN | 102119559 | A | 06 July 2011 | WO | 2010018158 | A1 | 18 February 2010 |
| | | | | EP | 2154921 | A1 | 17 February 2010 |
| | | | | US | 2011194493 | A1 | 11 August 2011 |
| CN | 107925942 | A | 17 April 2018 | ZA | 201800772 | B | 31 July 2019 |
| | | | | JP | 2018523429 | A | 16 August 2018 |
| | | | | JP | 6810737 | B2 | 06 January 2021 |

Form PCT/ISA/210 (patent family annex) (July 2022)

EP 4 572 417 A1

INTERNATIONAL SEARCH REPORT
Information on patent family members

International application No.

**PCT/CN2023/112143**

| Patent document cited in search report | Publication date (day/month/year) | Patent family member(s) | | Publication date (day/month/year) |
|---|---|---|---|---|
| | | EP | 3335470 A1 | 20 June 2018 |
| | | BR | 112018002079 A2 | 18 September 2018 |
| | | WO | 2017028881 A1 | 23 February 2017 |
| | | HK | 1247505 A1 | 21 September 2018 |
| | | US | 2018227832 A1 | 09 August 2018 |
| | | US | 11057823 B2 | 06 July 2021 |

Form PCT/ISA/210 (patent family annex) (July 2022)

**EP 4 572 417 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210967583X